# EUROPÄISCHE PATENTSCHRIFT

(11) **EP 3 270 747 B1**
(45) Veröffentlichungstag und Bekanntmachung des Hinweises auf die Patenterteilung: **20.02.2019**
(21) Anmeldenummer: 16708179.3
(22) Anmeldetag: 07.03.2016
(51) Int. Cl.: A47J 31/42, A47J 42/50

(54) **KAFFEEVOLLAUTOMAT MIT EINER EINRICHTUNG ZUR PORTIONIERUNG VON KAFFEEBOHNEN**
FULLY AUTOMATIC COFFEE MAKER WITH A DEVICE FOR PORTIONING COFFEE BEANS
MACHINE À CAFÉ AUTOMATIQUE AVEC UN DISPOSITIF DE DOSAGE EN PORTIONS DES GRAINS DE CAFÉ

(30) Priorität: 18.03.2015 CH 3752015; 14.10.2015 CH 14892015
(43) Veröffentlichungstag der Anmeldung: 24.01.2018
(73) Patentinhaber: Imhof, Matthias, 79730 Murg-Niederhof (DE); Imhof, Urs, 6017 Ruswil (CH)
(72) Erfinder: Imhof, Matthias, 79730 Murg-Niederhof (DE); Imhof, Urs, 6017 Ruswil (CH)
(74) Vertreter: Schneider Feldmann AG Patent- und Markenanwälte
(86) Internationale Anmeldenummer: PCT/EP2016/054797
(87) Internationale Veröffentlichungsnummer: WO 2016/146422

(56) Entgegenhaltungen:
- EP-A1- 0 605 750
- DE-U1-202010 008 642
- US-A1- 2012 017 765

## Beschreibung

### Technisches Gebiet

Die vorliegende Erfindung betrifft einen Kaffeevollautomaten mit einer Einrichtung zur Portionierung von Kaffeebohnen gemäss Oberbegriff des ersten Patentanspruches.

### Stand der Technik

Einige Kaffeevollautomaten bekannter Hersteller von Kaffeevollautomaten umfassen Einrichtungen zur Portionierung von Kaffeebohnen.

Beispielsweise ist aus EP 2 578 120 A1 ein Kaffeevollautomat mit einer Einrichtung zur Portionierung von Kaffeebohnen bekannt, wobei die Einrichtung zur Portionierung von Kaffeebohnen im Wesentlichen eine Dosierkammer mit einstellbarem Dosierkammervolumen umfasst. Mittels zweier gegenüberliegender Kammerwände, welche gleichzeitig als Schieber zum Passieren von Kaffeebohnen fungieren, ist das Dosierkammervolumen durch eine translatorische Bewegung der beiden gegenüberliegenden Kammerwände relativ zueinander einstellbar. Hierbei ist zum Vollziehen der translatorischen Bewegung beziehungsweise zur Einstellung des Abstands zwischen den Kammerwänden eine Kammerwand bewegbar ausgestaltet. Mittels eines Elektromotors ist einerseits die translatorische Bewegung der bewegbaren Kammerwand und andererseits die Schieberbewegung zum Passieren von Kaffeebohnen durchführbar. Diese aus EP 2 578 120 A1 bekannte Einrichtung zur Portionierung von Kaffeebohnen eines Kaffeevollautomaten ist aus technischer Sicht umständlich und kompliziert.

Im Weiteren ist beispielsweise aus Dokument US 2012/0070546 A1 eine Einrichtung zur Portionierung von Kaffeebohnen bekannt. Die Einrichtung zur Portionierung von Kaffeebohnen umfasst eine Dosierkammer mit einstellbarem Dosierkammervolumen, wobei das Dosierkammervolumen durch eine translatorische Bewegung zweier gegenüberliegender Kammerwände relativ zueinander einstellbar ist. Die Einstellung des Abstands zwischen den Kammerwänden muss in komplizierter und umständlicher Weise mittels eines mit den gegenüberliegenden Kammerwänden verbundenen zusätzlichen Abstandhalters beispielsweise in Form einer Einstellschraube bewerkstelligt werden.

Zudem ist aus Dokument DE 20 2011 005 003 U1 ein Kaffeevollautomat mit einem Zweikammerbohnenbehälter sowie einer Einrichtung zur Portionierung von Kaffeebohnen bekannt. Die Einrichtung zur Portionierung von Kaffeebohnen wird im Wesentlichen durch Transportschnecken zwischen jeweils einem Bohnenbehälter und der Mahleinrichtung gebildet, wobei eine Transportschnecke rotatorisch antreibbar ist. Die Ausgestaltung dieses bekannten Kaffeevollautomaten ist besonders platzaufwändig und entspricht einer besonders komplizierten Bauweise, da die senkrecht zur Fallrichtung der Kaffeebohnen ausgerichteten Transportschnecken jeweils einen seitlich angeordneten Antrieb aufweisen.

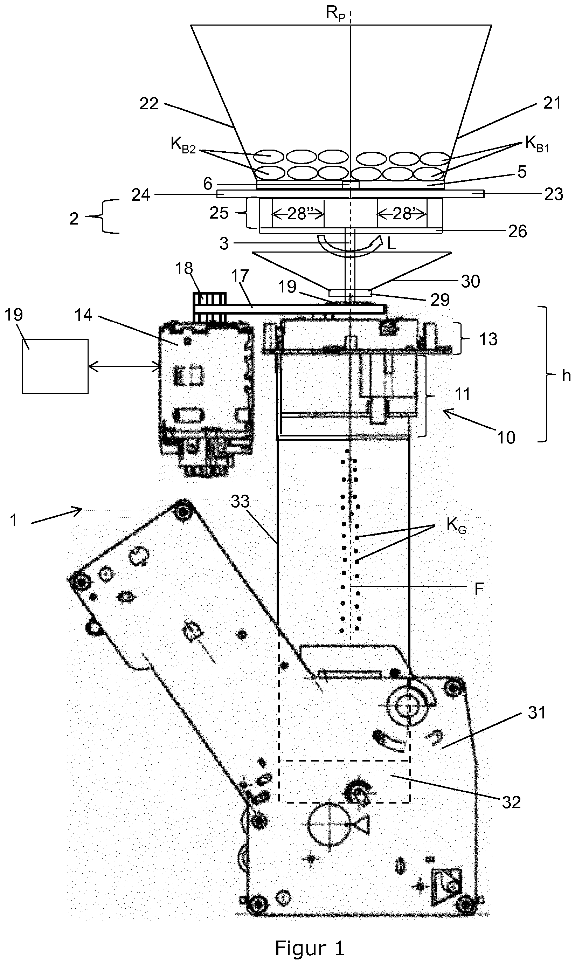

Das Dokument DE 20 2010 008642 U1 offenbart einen Kaffeevollautomat (siehe Paragraph 0005) mit einer Mahleinrichtung 6 zum Mahlen von Kaffeebohnen, umfassend eine Einrichtung 9 zum Portionieren von Kaffeebohnen, wobei die Kaffeebohnen der Einrichtung 9 aus einem Kaffeebohnen-Zufuhrbehälter 2 zuführbar sind, wobei der Kaffeevollautomat eine drehbar gelagerte Welle umfasst, welche unmittelbar mit einem Antrieb in einer Wirkverbindung steht, wobei die Welle drehfest mit einem rotierbaren Mahlelement 8 der Mahleinrichtung verbunden ist und unmittelbar mit der Einrichtung 9 in Wirkverbindung steht, so dass das rotierbare Mahlelement 8 der Mahleinrichtung zum Vermahlen von Kaffeebohnen und die Einrichtung 9 mittels der Welle gemeinsam antreibbar sind (siehe Fig. 1).

### Darstellung der Erfindung

Die vorliegende Erfindung hat sich zur Aufgabe gestellt, einen Kaffeevollautomaten mit einer Einrichtung zur Portionierung von Kaffeebohnen bereitzustellen, welche die Nachteile des Standes der Technik überwindet und insbesondere eine platzsparende und einfache Bauweise aufweist.

Diese Aufgabe erfüllt ein Kaffeevollautomat mit den Merkmalen des Patentanspruches 1.

Erfindungsgemäss umfasst der Kaffeevollautomat eine drehbar gelagerte Welle, welche mittelbar und unmittelbar mit einem Antrieb in einer Wirkverbindung steht, wobei die Welle drehfest mit einem rotierbaren Mahlelement der Mahleinrichtung verbunden ist und mittelbar oder unmittelbar mit einer rotatorisch antreibbaren Einrichtung zum Portionieren von Kaffeebohnen in Wirkverbindung steht, so dass das rotierbare Mahlelement der Mahleinrichtung zum Vermahlen von Kaffeebohnen und die Einrichtung gemeinsam mittels der Welle rotatorisch antreibbar ist. Ein derartiger rotatorischer Antrieb der Einrichtung zur Portionierung von Kaffeebohnen hat den grundsätzlichen Vorteil, dass Drehbewegungen im Vergleich mit translatorischen Bewegungen leise sind und ein verschleissarmer Betrieb ermöglicht wird. Im Weiteren lässt sich bei einem rotatorischen Antrieb die Betriebsgeschwindigkeit besonders leicht regeln.

In Kombination mit der rotatorisch antreibbaren Welle umfasst die Einrichtung zur Portionierung beziehungsweise Portioniereinrichtung von Kaffeebohnen eine zu dem mindestens einen Kaffeebohnen-Zufuhrbehälter hin angeordnete Portionierscheibe und eine zwischen Portionierscheibe und Mahleinrichtung angeordnete Bodenscheibe. Dabei umfasst die Portionierscheibe mindestens eine Kaffeeportionenbohrung zur Aufnahme mindestens einer Kaffeebohne aus dem mindestens einen Kaffeebohnen-Zufuhrbehälter. Im Weiteren umfasst die Bodenscheibe mindestens eine Ablassöffnung zur Entleerung der Kaffeeportionenbohrung. Dabei ist die Welle drehfest mit einem rotierbaren Mahlelement der Mahleinrichtung und der Portionierscheibe oder der Bodenscheibe derart verbunden, so dass das rotierbare Mahlelement der Mahleinrichtung zum Vermahlen von Kaffeebohnen und die Portionierscheibe oder Bodenscheibe zum Betreiben der Einrichtung mittels der Welle gemeinsam antreibbar ist. Im Sinne der vorliegenden Erfindung ist die mindestens eine Ablassöffnung der Bodenscheibe derart angeordnet, dass die mindestens eine Ablassöffnung mit der mindestens einen Kaffeeportionenbohrung zumindest teilweise in Deckung bringbar ist. Die Portionierscheibe umfasst vorteilhafterweise mehrere Kaffeeportionenbohrungen vorzugsweise gleichmässig über den Umfang verteilt zur Beschleunigung des Portionierungsprozesses. Gegenüber einer Portionierung mittels der aus DE 20 2011 005 003 U1 bekannten rotatorisch angetriebenen Portionierung bewirkt eine derartig ausgestaltete Einrichtung zum Portionieren von Kaffeebohnen eine besonders gezielte, präzise und dennoch schnelle Portionierung. Wenn beispielsweise eine Kaffeeportionenbohrung derart ausgelegt beziehungsweise dimensioniert ist, um einen Fünftel einer Portion eines gewünschten Kaffees entsprechen, so kann sehr schnell und präzise durch Entleerung von fünf Kaffeeportionenbohrungen eine Portion für den gewünschten Kaffee erhalten werden.

Vorzugsweise ist einerseits die Welle drehfest mit der Portionierscheibe verbunden, wodurch mit anderen Worten die Welle gleichsam mit der Portionierscheibe drehbar ist, während andererseits die Bodenscheibe im Wesentlichen feststehend ist beziehungsweise mit anderen Worten fest fixiert und nicht mit der Welle drehbar ist. Als feststehende Bodenscheibe kann auch ein der Portionierscheibe zugewandter Gehäuseabschnitt mit mindestens einer Ablassöffnung verstanden werden.

Alternativ ist es denkbar, dass einerseits die Welle drehfest mit der Bodenscheibe verbunden ist, wodurch mit anderen Worte die Welle gleichsam mit der Bodenscheibe drehbar ist, während andererseits die Portionierscheibe im Wesentlichen feststehend ist beziehungsweise mit anderen Worten fest fixiert und nicht mit der Welle drehbar ist.

Im Sinne einer bevorzugten Weiterbildung der vorliegenden Erfindung ist das Mahlwerk als Kegelmahlwerk ausgestaltet. Üblicherweise ist bevorzugt das, insbesondere als Kegelmahlwerk ausgestaltete, Mahlwerk aus einem während eines Mahlvorgangs rotierenden ersten Mahlelement und aus einem zweiten, an der Mahleinrichtung fest stehenden, Mahlelement aufgebaut. Besonders bevorzugt handelt es sich beim ersten Mahlelement um einen Mahlkegel und beim zweiten Mahlelement um einen Mahlring.

Im Sinne einer im Weiteren bevorzugten Weiterbildung der vorliegenden Erfindung kann die Welle unmittelbar mit einer rotierbar gelagerten Portioniereinheit der Einrichtung zum Portionieren von Kaffeebohnen in Wirkverbindung stehen, d.h. die Welle bildet die mittlere Drehachse bzw. Rotationsachse des inneren Mahlkegels sowie der Portionierscheibe. Mit anderen Worten wird durch die Anordnung der Welle im erfindungsgemässen Kaffeevollautomaten vorteilhaft erzielt, dass die Rotationsachse des inneren Mahlkegels im Wesentlichen der Rotationsachse der Portionierscheibe beziehungsweise der Bodenscheibe entspricht. Somit wird durch das Zusammenfallen dieser beiden Rotationsachsen durch die Anordnung der Welle im Kaffeevollautomaten erzielt, dass der Mahlkegel und die Portionierscheibe oder Bodenscheibe mittels der Welle gemeinsam in ein und derselben rotatorischen Bewegung antreibbar ist.

Alternativ kann es aus Platzgründen erwünscht sein, dass die Kaffeebohnen-Zufuhrbehälter des Kaffeevollautomaten gegenüber der Mahleinrichtung seitlich versetzt angeordnet ist.

Im Sinne einer bevorzugten Weiterbildung der vorliegenden Erfindung steht in diesem Zusammenhang die Welle mit der als um ein zusätzliche Achse rotierbar gelagertes Antriebselement ausgebildeten Portionierscheibe der Einrichtung zum Portionieren von Kaffeebohnen mittelbar, d.h. beispielsweise mittels eines Keilriemens, in Wirkverbindung, wodurch das rotierbare Mahlelement der Mahleinrichtung und die rotierbar gelagerte Portioniereinheit zum Betreiben der Portioniereinrichtung gemeinsam mittels der Welle rotatorisch antreibbar sind. Besonders bevorzugt kann zwischen der Welle und der zusätzlichen Achse eine Übersetzung derart ausgebildet sein, so dass die Einrichtung zum Portionieren von Kaffeebohnen sowie die Mahleinrichtung bei einer jeweils bevorzugten Drehgeschwindigkeit erfolgen kann.

Im Sinne einer bevorzugten Weiterbildung der vorliegenden Erfindung wird unter einer drehfesten Verbindung der Welle mit dem Mahlkegel verstanden, dass die Welle an einem Ende an den Mahlkegel angeformt und dadurch drehfest fixiert ist.

Wenn im Falle einer unmittelbaren Wirkverbindung der Welle mit der Portioniereinheit, bei welcher die Rotationsachse der Welle der Rotationsachse der Portionierscheibe entspricht, die Welle an die Portionierscheibe der Einrichtung zum Portionieren von Kaffeebohnen angeformt oder drehfest fixierbar ist, dann bilden die Einrichtung zum Portionieren von Kaffeebohnen, die Welle und der an die Welle angeformte Mahlkegel eine Einheit beziehungsweise ein einziges Bauteil.

Vorzugsweise ist die derart gebildete Einheit an der Einrichtung zum Portionieren von Kaffeebohnen, insbesondere an der Portionierscheibe, im erfindungsgemässen Kaffeevollautomaten derart mittels mindestens eines geeigneten Lagers gelagert, so dass vorteilhaft auf eine weitere Lagerung unterhalb der Portioniereinrichtung verzichtet werden kann. Insbesondere kann deshalb vorteilhaft im Bereich der Mahleinrichtung auf eine zusätzliche Lagerung verzichtet werden, wodurch als weiterer, resultierender Vorteil das Risiko eines möglichen Absetzens gemahlener Kaffeebohnen im Bereich der Mahleinrichtung reduziert wird. Mit anderen Worten wird durch eine Lagerung an der Portioniereinrichtung, d.h. im in Schwerkraftrichtung betrachtet obersten Bereich, ein hängende Lagerung der Einheit aus Portioniereinrichtung, Welle und Mahleinrichtung erzielt. Ein hierbei geeignetes Lager muss einerseits als Aufhängung fungieren und andererseits die Rotierbarkeit der Portionierscheibe gewährleisten können.

Besonders bevorzugt ist die Einrichtung zum Portionieren von Kaffeebohnen der derart gebildeten Einheit an einem hierfür vorgesehenen Stützgehäuse des erfindungsgemässen Kaffeevollautomaten anhand eines geeigneten Lagers gelagert.

Im Weiteren ist im Sinne einer bevorzugten Weiterbildung der vorliegenden Erfindung der Antrieb durch den Mahlwerksmotor ausgebildet.

Eine derartige Anordnung einer Welle erlaubt durch das gemeinsame Antreiben des Mahlkegels und der Portionierscheibe oder der Bodenscheibe vorteilhaft, dass nur ein Antrieb für die Kaffeebohnenportionierung sowie die Mahleinrichtung notwendig ist. Mit anderen Worten erzielt platzsparend ein Antrieb in ein und derselben rotatorischen Bewegung eine Portionierung der Kaffeebohnen und ein Mahlen der Kaffeebohnen in der Mahleinrichtung. Auf eine platzaufwendige, translatorische Bewegung im Rahmen der Portionierung kann damit im Gegensatz zum bekannten Stand der Technik vorteilhaft verzichtet werden. Im Weiteren hat eine derartige Anordnung einer Welle den Vorteil, dass eine wesentlich verringerte Bauhöhe erzielt werden kann.

Vorzugsweise ist die Portionierscheibe mit mindestens einer Kaffeeportionenbohrung versehen, wobei jeweils eine bevorzugt muldenförmig ausgestaltete Kaffeeportionenbohrung beispielsweise mit mindestens etwa 8 Kaffeebohnen befüllbar ist. Im Sinne einer bevorzugten Weiterbildung der vorliegenden Erfindung weist jeweils eine Kaffeeportionenbohrung eine beliebig ausgestaltete, geeignete Geometrie auf, d.h. insbesondere einen geeigneten Durchmesser der Kaffeeportionenbohrung in Kombination mit einer geeigneten Dicke der Portionierscheibe, um mindestens etwa 8 Kaffeebohnen aufzunehmen. Denkbar ist eine kuchenstückförmig ausgebildete Kaffeeportionenbohrung, wobei eine derartige Form bei einer bevorzugt kreisförmig ausgestalteten Portionierungsscheibe bei gewünschter, hoher Anzahl von Kaffeeportionenbohrungen einer besonders vorteilhaften Unterteilung entspricht. Alternativ ist auch jegliche andere Form einer Kaffeeportionenbohrung denkbar, beispielsweise kreisrund, oval etc. Bei kuchenstückförmig ausgebildeten Kaffeeportionenbohrungen ist bevorzugt jeweils auch eine Ablassöffnung kuchenstückförmig ausgebildet, wobei alternativ auch jegliche andere Form einer Ablassöffnung denkbar ist, beispielsweise kreisrund, oval etc. Ganz besonders bevorzugt weisen die Kaffeeportionenbohrung sowie die Ablassöffnung eine kongruente beziehungsweise deckungsgleiche Form auf, wodurch vorteilhaft jeweils eine vollständige Entleerung sichergestellt wird. Im Weiteren kann idealerweise die Ablassöffnung gegenüber der Kaffeeportionenbohrung eine vergrösserte Dimension aufweisen, beispielsweise in Form eines Langlochs, wodurch bei der Entleerung der Kaffeeportionenbohrung einem Verklemmen von Kaffeebohnen entgegengewirkt wird.

Vorzugsweise wird eine derartige Anordnung einer Welle im Zusammenhang mit einem relativ zum Mahlwerk innerhalb des Kaffeeautomaten seitlich versetzten, mit der Welle mittelbar oder unmittelbar in Wirkverbindung stehenden Antrieb beziehungsweise Mahlwerksmotor verwendet, wie dies aus der Schweizer Patentanmeldung Nr. 01757/14 bekannt ist. Unter dem Begriff "seitliche" Versetzung des Mahlwerkmotors wird eine seitliche Versetzung relativ zum Mahlwerk verstanden, wodurch der Mahlwerksmotor idealerweise in einem Bereich ausserhalb einer im Wesentlichen in Richtung der Schwerkraft verlaufenden Linie zwischen Mahleinrichtung und Brühkammer angeordnet ist. Die seitliche Versetzung des Antriebs beziehungsweise Mahlwerksmotors ermöglicht vorteilhaft, dass gemahlene Kaffeebohnen ohne eine Zwischenlagerung und Verzicht auf eine Mahlgutkammer mittels der Schwerkraft gesamthaft der Brühkammer zuführbar sind. Beispielsweise kann eine derartige seitliche Versetzung des Mahlwerksmotors erzielt werden, indem der Mahlwerksmotor mit einer Aussenverzahnung der Portionierscheibe der Einrichtung zum Portionieren von Kaffeebohnen in Wirkverbindung steht.

Grundsätzlich entspricht es jedoch alternativ auch einer möglichen Weiterbildung der Erfindung, dass die Welle mit einem Antrieb in Wirkverbindung steht, wobei der Antrieb unterhalb einer Mahlgutkammer einer Mahleinrichtung, auf einer der Kaffeebohnenzuführung abgewandten Seite angeordnet ist.

Weitere vorteilhafte Ausgestaltungsformen sind in den weiteren abhängigen Patentansprüchen angegeben.

Bevorzugt umfasst der erfindungsgemässe Kaffeevollautomat mindestens einen Schieber, wobei der mindestens eine Schieber zwischen dem mindestens einen Kaffeebohnen-Zufuhrbehälter und der Portionierscheibe angeordnet ist. Besonders bevorzugt umfasst der erfindungsgemässe Kaffeevollautomat zwei oder mehr Schieber mit dem Vorteil, dass zwischen verschiedenen Kaffeesorten gewählt werden kann beziehungsweise dass durch Betätigen beispielsweise zweier Schieber eine Mischung nach eigenem Geschmack aus zwei verschiedenen Kaffeebohnen erhalten werden kann.

Im Rahmen einer feststehenden Bodenscheibe beziehungsweise Gehäuseabschnitt mit Ablassöffnungen und einer durch die Welle drehbaren Portionierscheibe kann alternativ zu mindestens einem Schieber mindestens einer ersten Lochscheibe mit jeweils einem Loch pro Kaffeebohnen-Zufuhrbehälter zwischen dem mindestens einen Kaffeebohnen-Zufuhrbehälter und der Einrichtung zum Portionieren von Kaffeebohnen angeordnet sein, wobei bei Vorhandensein zweier Kaffeebohnen-Zufuhrbehälter eine zweite Lochscheibe mit nur einem Loch zusätzlich idealerweise benachbart zur zweiten Lochscheibe angeordnet ist. Im Sinne der vorliegenden Erfindung ist das mindestens eine Loch der mindestens einen Lochscheibe derart angeordnet, dass das mindestens eine Loch mit der mindestens einen Kaffeeportionenbohrung zumindest teilweise in Deckung bringbar ist. Die mindestens eine Lochscheibe kann beispielsweise mittels eines Schrittmotors oder eines Elektromagnets in Drehung versetzbar und dabei in eine gewünschte Position bringbar sein.

Gemäss einer weiteren, bevorzugten Weiterbildung der vorliegenden Erfindung kann der erfindungsgemässe Kaffeevollautomat derart ausgestaltet sein, beispielsweise mit einer entsprechend ausgestalteten Steuereinheit, dass der mindestens eine Schieber nebst einer vollständigen Offenstellung auch nur in einer beliebig gewählten, vorbestimmbaren Zwischenstellung geöffnet werden kann. In diesem Zusammenhang kann beispielsweise eine Zwischenstellung des Schiebers einstellbar sein, bei welcher der Schieber gegenüber der Kaffeeportionenbohrung nur zur Hälfte geöffnet wird. Durch eine derartige Einstellbarkeit von Zwischenstellungen des Schiebers kann vorteilhaft nur eine teilweise Befüllung der Kaffeeportionenbohrung mit einer jeweiligen Kaffeebohnensorte aus jeweils einem Kaffeebohnen-Zufuhrbehälter erzielt werden, wodurch die Möglichkeiten zur Erzielung von Mischungen aus verschiedenen Kaffeebohnen nochmals zusätzlich erweitert werden kann. Alternativ ist es denkbar, dass beispielsweise die Steuereinheit derart ausgestaltet ist, dass mittels einer Zeitsteuerung für eine vorbestimmbare Zeit ein jeweiliger Schieber geöffnet beziehungsweise die Löcher der Lochscheiben in Deckung gebracht werden und dadurch Mischungen aus verschiedenen Kaffeebohnen erzielt werden.

Ein Problem, welches im Betrieb des erfindungsgemässen Kaffeevollautomaten auftreten kann, betrifft ein mögliches Einklemmen einzelner Kaffeebohnen zwischen Portionierscheibe und erstem und/oder zweitem Schieber oder Lochscheibe beziehungsweise zwischen Portionierscheibe und Bodenscheibe und ein damit einhergehendes Blockieren. Beispielsweise kann ein derartiges Einklemmen einzelner Kaffeebohnen in einem Schliessbereich zwischen der Kaffeeportionenbohrung der Portionierscheibe und der Ablassöffnung der Bodenscheibe stattfinden, wenn bei einer Drehung der Portionierscheibe dessen Kaffeeportionenbohrung gegenüber der Ablassöffnung der Bodenscheibe aus einem in Deckung gebrachten Zustand, d.h. bei Entleerung der Kaffeeportionenbohrung, bewegt wird. Andererseits können bei Schliessen des ersten beziehungsweise zweiten Schiebers gegenüber der Kaffeeportionenbohrung der Portionierscheibe in einem Schliessbereich einzelne Kaffeebohnen eingeklemmt werden.

Vorzugsweise weisen die Portionierscheibe und/oder die Bodenscheibe und/oder der erste und/oder zweite Schieber zumindest abschnittsweise eine derartige Elastizität oder elastische Mittel wie beispielsweise vorstehende Gummilippen auf, um eine Volumenverdrängung durch verklemmte Kaffeebohnen zuzulassen und dadurch ein mögliches Blockieren im Schliessbereich zu verhindern. Beispielsweise können die Gummilippen derart angeordnet und ausgestaltet sein, um sich im Bereich einer verklemmten Kaffeebohne flachzulegen. Alternativ kann die Portionierscheibe und/oder die Bodenscheibe und/oder der erste und/oder zweite Schieber oder Lochscheibe eine derartige Stabilität und Festigkeit aufweisen, dass eine eingeklemmte Kaffeebohne abgeschert wird, beispielsweise indem die Portionierscheibe und/oder die Bodenscheibe und/oder der erste und/oder zweite Schieber oder Lochscheibe zumindest in einem Schliessbereich aus gehärtetem Stahl oder dergleichen gefertigt sind. Alternativ oder zusätzlich zu einer besonderen Stabilität und Festigkeit kann die Portionierscheibe und/ oder Bodenscheibe und/oder der erste und/oder zweite Schieber zumindest abschnittsweise in einem Schliessbereich mit einer schräg verlaufenden, d.h. zu einem Schliessbereich sich verjüngenden, und/oder scharfen Kante versehen sein, so dass eine in den Schliessbereich geratene Kaffeebohne entweder nach unten schiebt oder situativ in einer scherenden Bewegung und dadurch gegenüber einem geraden, sich nicht verjüngenden Schliessbereich verringertem Kraftaufwand zerteilt wird. Im Weiteren ist es denkbar, dass zwischen Kaffeebohnen-Zufuhrbehälter und erster oder zweiter Lochscheibe in einer Aussparung eine Gummilippe oder Federklappe oder dergleichen angeordnet ist. Zudem ist es denkbar, dass zwischen Kaffeebohnen-Zufuhrbehälter und erster oder zweiter Lochscheibe ein Wischer angebracht ist zur Beförderung von Kaffeebohnen in eine Kaffeeportionenbohrung der Portionierscheibe.

Bevorzugt ist die mindestens eine Ablassöffnung der Bodenscheibe in einem Bereich ausserhalb des mindestens einen Schiebers angeordnet. Durch eine derartige Anordnung der Ablassöffnung wird vorteilhaft ein unkontrolliertes Durchfallen von Kaffeebohnen von dem mindestens einen Kaffeebohnen-Zufuhrbehälter in die Mahleinrichtung verhindert, wenn die Kaffeeportionenbohrung und die Ablassöffnung im Wesentlichen in Deckung sind zur Entleerung der Kaffeeportionenbohrung, da im Bereich ausserhalb des mindestens einen Schiebers keine Passage für den Austritt von Kaffeebohnen aus dem mindestens einen Kaffeebohnen-Zufuhrbehälter vorhanden ist.

Vorzugsweise umfasst der erfindungsgemässe Kaffeevollautomat eine Montageeinheit zum Montieren des mindestens einen Kaffeebohnen-Zufuhrbehälters. Beispielsweise kann die Montageeinheit einen Einrastmechanismus aufweisen, mittels welchem jeweils der mindestens eine Kaffeebohnenzufuhrbehälter lösbar verbindbar ist. Besonders bevorzugt umfasst der erfindungsgemässe Kaffeevollautomat eine Gleitbuchse, welche geeignet ist zur Aufnahme der Welle, wobei die Gleitbuchse vorzugsweise an der Montageeinheit angeordnet ist und wobei die Welle in der Gleitbuchse geführt und rotierbar gelagert ist. Eine derartige Aufnahme der Gleitbuchse in der Welle verbessert vorteilhaft die Laufgenauigkeit sowie eine stabile Anordnung der Welle, wobei die Montageeinheit vorteilhaft eine stabile Befestigung der Gleitbuchse gewährleisten kann.

Vorzugsweise umfasst der erfindungsgemässe Kaffeevollautomat eine trichterförmige Vorrichtung zur Aufnahme von portionierten Kaffeebohnen, wobei die trichterförmige Vorrichtung zwischen der Einrichtung zum Portionieren von Kaffeebohnen und der Mahleinrichtung angeordnet ist. Eine derartig angeordnete, trichterförmige Vorrichtung hat den Vorteil, dass die portionierten Kaffeebohnen verlustlos und zentriert der Mahleinrichtung zuführbar sind.

Besonders bevorzugt umfasst die trichterförmige Vorrichtung mindestens Öffnungs- und Schliessmechanismus wie beispielsweise einen dritten Schieber, wobei dieser Schieber auf der der Einrichtung abwandten Seite der trichterförmigen Vorrichtung angeordnet ist. Dieser dritte Schieber kann vorteilhaft in einem verschlossenen Zustand den Zweck erfüllen, dass die portionierten Kaffeebohnen vor einem Vermahlen in der Mahleinrichtung aufgefangen werden. Da üblicherweise im erfindungsgemässen Kaffeevollautomaten die Welle durch die Öffnung der trichterförmigen Vorrichtung verläuft, muss bevorzugt ein solcher dritter Schieber eine geeignete Form besitzen, um einen verschlossenen Zustand um die Welle herum zu gewährleisten.

Gemäss einer bevorzugten Weiterbildung der vorliegenden Erfindung kann die trichterförmige Vorrichtung mit einer Unterteilung in einzelne Sektoren versehen sein, wodurch die einzelnen Sektoren geeignet sind zur Aufnahme und/oder Speicherung vorportionierter Kaffeebohnen aus der Einrichtung zur Portionierung von Kaffeebohnen. Jeweils ein Sektor der trichterförmigen Vorrichtung kann bevorzugt mit einem jeweiligen Schieber oder vergleichbaren Öffnungs- und Schliessmechanismus versehen sein. Eine derartige sektorartige Unterteilung der trichterförmigen Vorrichtung erlaubt vorteilhaft, dass gleichzeitig eine Portionierung in einen jeweiligen Sektor parallel zu einer Vermahlung einer früheren Portion erfolgen kann.

Vorzugsweise umfasst der erfindungsgemässe Kaffeevollautomat einen bevorzugt mit dem Mahlwerksmotor gekoppelten Sensor zur Erfassung der Anzahl Umdrehungen der Welle beziehungsweise der mit der Welle drehfest gekoppelten Portionierscheibe. Alternativ zu einem mit dem Mahlwerksmotor gekoppelten Sensor kann eine Erfassung der Anzahl Umdrehungen der Welle elektronisch oder über eine Amperemessung anhand des Mahlwerkmotors erfasst und/oder gesteuert werden. Beispielsweise kann die Mahldauer beziehungsweise Anzahl Umdrehungen der Portionierscheibe dadurch einstellbar sein, dass das Mahlwerk beziehungsweise die Portionierscheibe bei Erreichen einer Leerlaufamperezahl stoppt. Im Sinne einer bevorzugten Weiterbildung umfasst der erfindungsgemässe Kaffeevollautomat eine Auswertungseinheit sowie eine Steuerung, wobei mittels der Auswertungseinheit beispielsweise anhand der Umdrehungen die Anzahl Entleerungen einer befüllten Kaffeeportionenbohrung auswertbar und mittels der Steuerung eine gewünschte, vorbestimmbare Anzahl Entleerungen einstellbar ist. Besonders bevorzugt ist anhand der Steuerung der zudem erste beziehungsweise zweite Schieber betätigbar.

Es ist eine bekannte Problematik, dass sich unter Kaffeebohnen kleine Steinchen befinden können. Bis anhin haben solche Steinchen die Mahlwerke bekannter Kaffeevollautomaten blockiert oder sogar kaputt gemacht. Bekannte Kaffeevollautomaten sind in diesem Zusammenhang bereits mit einer Ampere-Überwachung des Mahlwerkmotors ausgestattet, welcher das Überschreiten eines vordefinierten Widerstands im Mahlwerk registriert, der Mahlwerksmotor wird frühzeitig ausgeschaltet. Gewisse bekannte Kaffeevollautomaten erzeugen hierbei einen Alarm und müssen beispielsweise in einem Fachgeschäft geöffnet werden, was aufwendig und teuer ist. Bevorzugt ist in diesem Zusammenhang der erfindungsgemässe Kaffeevollautomat derart ausgestaltet, dass die drehbar gelagerte Welle des erfindungsgemässen Kaffeevollautomaten sowohl im Uhrzeigersinn wie auch im Gegenuhrzeigersinn drehbar und höhenverstellbar, d.h. in Längsrichtung der Welle beweglich, ist. Der Mahlkegel des Mahlwerks im erfindungsgemässen Kaffeevollautomaten weist ein an sich bei Mahlkegeln bekanntes Gewinde auf, durch welches Mahlgut dem Mahlspalt des Mahlwerks in einer Drehbewegung zuführbar ist. Eine derartige drehbare Lagerung und Höhenverstellbarkeit der Welle ist vorteilhaft, da bei einer bevorzugt gleichzeitig dem üblichen Betrieb entgegengesetzten, d.h. das Mahlgut vom Mahlspalt wegführenden, Drehbewegung durch die Höhenverstellung der Welle beziehungsweise des Mahlkegels eine Offenstellung, d.h. ein genügend grosser Spalt zwischen Mahlkegel und Mahlring erzeugbar ist, um Steinchen sowie allfällig vorhandenes ungemahlenes Mahlgut über den Spalt und anschliessend über die Brüheinheit in den Kaffeetrester abzuführen. Aufgrund einer solchen Höhenverstellbarkeit der Welle ist vorteilhaft der Mahlspalt beziehungsweise die Mahlfeinheit einstellbar, so dass zu einer jeweiligen gewünschten beziehungsweise programmierten Kaffeebohnensorte die bevorzugte Mahlfeinheit einstellbar ist.

Zusätzlich oder alternativ zu einem derartigen höhenverstellbaren Mahlkegel kann auch der Mahlring derart höhenverstellbar ausgebildet sein, so dass die Offenstellung, d.h. ein genügend grosser Spalt zwischen Mahlkegel und Mahlring, erzeugbar ist, um Steinchen sowie allfällig vorhandenes ungemahlenes Mahlgut über den Spalt und anschliessend über die Brüheinheit in den Kaffeetrester abzuführen. Im Weiteren kann durch einen derart höhenverstellbaren Mahlring zu einer jeweiligen gewünschten Kaffeebohnensorte die bevorzugte Mahlfeinheit eingestellt werden. Vorzugsweise wird die Höhenverstellbarkeit des Mahlrings mittels eines mit dem Mahlring und einem Antrieb in Wirkverbindung stehenden Gewinderings erzielt.

Im Zusammenhang mit einer derartigen Höhenverstellbarkeit des Mahlkegels und / oder Mahlrings kann der erfindungsgemässe Kaffeevollautomat mit einer derartigen Automatik ausgestattet sein, dass die Mahleinrichtung nach jedem Mahlvorgang in die Offenstellung fährt und bei jeder Wahl für einen Kaffee auf die bevorzugte Mahlfeinheit sich begibt.

Ein weiterer Aspekt der vorliegenden Erfindung betrifft ein Verfahren zum Betreiben des erfindungsgemässen Kaffeevollautomaten mit einer Einrichtung zur Portionierung von Kaffeebohnen, umfassend die Verfahrensschritte:
a) Öffnen des ersten und/oder zweiten Schiebers zur Befüllung der mindestens einen Kaffeeportionenbohrungen des Portionierscheibe;
b) Drehen der Kaffeeportionenbohrung der Portionierscheibe über die Ablassöffnungen der Bodenscheibe zur Entleerung der mindestens einen Kaffeeportionenbohrung der Portionierscheibe, so dass die Kaffeebohnen mittelbar oder unmittelbar der Mahleinrichtung zugeführt werden;
c) Schliessen des ersten und/oder zweiten Schiebers zur Beendigung des Portionierungsvorgangs (und Weitervermahlung der Kaffeebohnen) nach Erreichen einer vorbestimmten Anzahl Befüllungen gemäss Schritt a) und Entleerungen gemäss Schritt b) der Kaffeeportionenbohrungen.

Mit anderen Worten erfolgt eine Entleerung der Portionierscheibe im erfindungsgemässen Kaffeevollautomaten, indem die Kaffeeportionenbohrung der Portionierscheibe mit der Ablassöffnung der Bodenscheibe in Deckung gebracht wird.

Alternativ zur Verwendung von ersten und/oder zweiten Schieber kann mindestens eine Lochscheibe mit jeweils einem Loch pro Kaffeebohnen-Zufuhrbehälter verwendet werden. Bei Vorhandensein eines einzigen Kaffeebohnen-Zufuhrbehälters des Kaffeevollautomaten wird alternativ in Schritt a) eine einzige Lochscheibe mit einem einzigen Loch mittels Drehung in einen Füllbereich unterhalb des Kaffeebohnen-Zufuhrsbehälters gebracht zur Befüllung der mindestens einen Kaffeeportionenbohrung der Portionierscheibe. Im Weiteren wird alternativ in Schritt c) das einzige Loch der einzigen Lochscheibe zum Schliessen des einzigen Kaffeebohnen-Zufuhrbehälters in einen Bereich ausserhalb des Füllbereichs gebracht.

Bei Vorhandensein zweier Kaffeebohnen-Zufuhrbehälter eines Kaffeevollautomaten werden alternativ zu Schritt a) bei zwei Lochscheiben eine erste Lochscheibe mit jeweils einem Loch pro Kaffeebohnen-Zufuhrbehälter mit dem Loch einer zweiten benachbarten Lochscheibe, sowie die mindestens eine Kaffeeportionenbohrung in einem Füllbereich unterhalb des Kaffeebohnen-Zufuhrbehälters in Deckung gebracht zur Befüllung der mindestens einen Kaffeeportionenbohrung. Im Weiteren wird alternativ in Schritt c) durch Drehung zumindest einer der beiden Lochscheiben derart bewegt, dass dessen Loch nicht mehr in Deckung mit dem Loch der weiteren Lochscheibe ist zum Schliessen eines jeweiligen Kaffeebohnen-Zufuhrbehälters.

Die Portionierung anhand der Einrichtung zur Portionierung von Kaffeebohnen des erfindungsgemässen Kaffeevollautomaten erfolgt mittels Einstellung einer vorbestimmten Anzahl Umdrehungen der Portionierscheibe beziehungsweise der Bodenscheibe. Mit anderen Worten wird die Portionierung anhand der Anzahl der hierbei erzielten Befüllungen und Entleerungen der Kaffeeportionenbohrungen realisiert. Bei einer Kaffeeportionenbohrung ausgelegt für ca. 25 Kaffeebohnen (entspricht ca. 3 Gramm Kaffeebohnen) wird üblicherweise nach 3 bis 4 Entleerungen der Kaffeeportionenbohrung der Portionierscheibe eine gewünschte Kaffeebohnenmenge zur Bereitstellung jeweils eines Kaffees erzielt. Somit erlaubt der Betrieb anhand der Einrichtung zur Portionierung von Kaffeebohnen vorteilhaft eine besonders gezielte Portionierung von Kaffeebohnen beziehungsweise direkte Zufuhr einer jeweils gewählten Portion Kaffeebohnen zur Mahleinrichtung, wobei ein Verbleib einzelner Kaffeebohnen zwischen dem mindestens einen Kaffeebohnen-Zufuhrbehälter und der Mahleinrichtung verhindert wird.

Das Verfahren zum Betreiben des erfindungsgemässen Kaffeevollautomaten ist bei unmittelbarer Zufuhr von Kaffeebohnen in die Mahleinrichtung, d.h. ohne ein zwischenzeitliches Auffangen beispielsweise in einer trichterförmigen Vorrichtung, besonders vorteilhaft, da durch das direkte Fallen der Kaffeebohnen in die Mahleinrichtung gleichzeitig eine Portionierung und Mahlen der Kaffeebohnen stattfindet, wodurch die Gefahr eines möglichen Verbleibs von Kaffeebohnen zwischen Kaffeebohnen-Zufuhrbehälter und Mahleinrichtung verringert wird. Mit anderen Worten ist es prinzipiell möglich, dass sich die Drehgeschwindigkeiten für den Mahlvorgang und die Portionierung mittels der Einrichtung zum Portionieren von Kaffeebohnen entsprechen. Gemäss einer bevorzugten Weiterbildung der vorliegenden Erfindung kann alternativ die Einrichtung zum Portionieren auf eine derartige, gewünschte Drehgeschwindigkeit einstellbar sein beziehungsweise eingestellt werden, so dass die Befüllungen beziehungsweise Entleerungen sich in gewünschtem Masse kontrollieren lassen. Üblicherweise ist die gewünschte Drehgeschwindigkeit der Einrichtung zum Portionieren gegenüber der Drehgeschwindigkeit des Mahlkegels des Mahlwerks verringert. Bei Beendigung des Portioniervorgangs durch Schliessen des mindestens einen Schiebers dreht üblicherweise der Mahlkegel des Mahlwerks weiter bis zum Erreichen des erforderlichen Mahlgrads der gemahlenen Kaffeebohnen zur Zubereitung eines Kaffees, vorzugsweise bei einer gewünschten Drehgeschwindigkeit des Mahlkegels des Mahlwerks.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben. Es zeigen:
- Fig. 1: eine schematische Darstellung des erfindungsgemässen Kaffeevollautomaten mit einer Einrichtung zum Portionieren von Kaffeebohnen;
- Fig. 2a: eine schematische Darstellung der Einrichtung zum Portionieren von Kaffeebohnen des erfindungsgemässen Kaffeevollautomaten bei geschlossenem, erstem Schieber;
- Fig. 2b: eine schematische Darstellung der Einrichtung zum Portionieren von Kaffeebohnen des erfindungsgemässen Kaffeevollautomaten geöffnetem, erstem Schieber;
- Fig. 2c: eine schematische Darstellung der Einrichtung zum Portionieren von Kaffeebohnen des erfindungsgemässen Kaffeevollautomaten bei Entleerung der Kaffeeportionenbohrung der Portionierscheibe;
- Fig. 3a: eine schematische Obenansicht der Einrichtung zum Portionieren von Kaffeebohnen des erfindungsgemässen Kaffeevollautomaten bei Befüllung der Kaffeeportionenbohrung der Portionierscheibe;
- Fig. 3b: eine schematische Obenansicht der Einrichtung zum Portionieren von Kaffeebohnen bei Entleerung der Kaffeeportionenbohrung der Portionierscheibe;
- Fig. 3c: eine schematische Obenansicht der Einrichtung zum Portionieren von Kaffeebohnen des erfindungsgemässen Kaffeevollautomaten mit einem mit einem Loch versehenen Schieber in einer Schliessstellung;
- Fig. 3d: eine schematische Obenansicht der Einrichtung zum Portionieren von Kaffeebohnen des erfindungsgemässen Kaffeevollautomaten mit einem mit einem Loch versehenen Schieber in einer Offenstellung;
- Fig. 4: eine schematische Darstellung einer Mahleinrichtung mit einer angeformten Welle am inneren Mahlkegel des erfindungsgemässen Kaffeevollautomaten;
- Fig. 5a: eine schematische Darstellung einer zweiten Ausführungsform des erfindungsgemässen Kaffeevollautomaten mit zwei Lochscheiben;
- Fig. 5b: eine schematische Obenansicht der zweiten Ausführungsform des erfindungsgemässen Kaffeevollautomaten mit zwei Lochscheiben;
- Fig. 5c: eine schematische Obenansicht der Einrichtung zum Portionieren von Kaffeebohnen des erfindungsgemässen Kaffeevollautomaten mit einer einzigen Lochscheibe;
- Fig. 6a: eine schematische Darstellung einer dritten Ausführungsform des erfindungsgemässen Kaffeevollautomaten mit versetzter Mahleinrichtung zur Einrichtung zum Portionieren von Kaffeebohnen;
- Fig. 6b: eine schematische Obenansicht der dritten Ausführungsform des erfindungsgemässen Kaffeevollautomaten mit versetzter Mahleinrichtung zur Einrichtung zum Portionieren von Kaffeebohnen;
- Fig. 7: eine schematische Darstellung einer vierten Ausführungsform des erfindungsgemässen Kaffeevollautomaten mit einem Stützgehäuse, welches die Mahleinrichtung und die Einrichtung zum Portionieren von Kaffeebohnen aufnimmt, mit einer weiteren Antriebsvariante;
- Fig. 8: eine schematische Darstellung einer fünften Ausführungsform des erfindungsgemässen Kaffeevollautomaten mit einem Stützgehäuse mit einer weiteren Antriebsvariante.

### Beschreibung

Fig. 1 zeigt eine schematische Darstellung eines erfindungsgemässen Kaffeevollautomaten 1 mit einer Mahleinrichtung 10 sowie einer Einrichtung 2 zum Portionieren von Kaffeebohnen K_{B1}; K_{B2}.

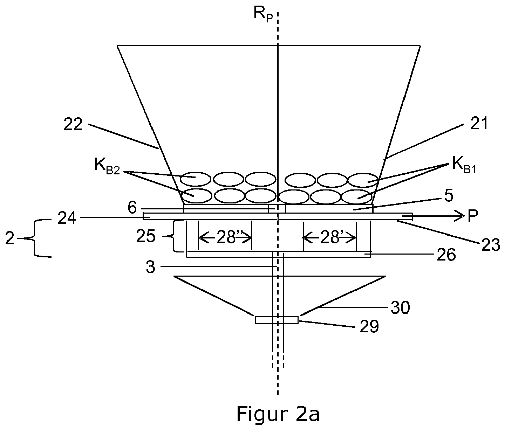

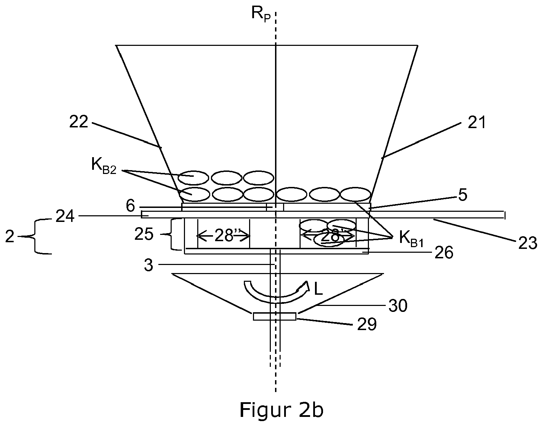

Über der Einrichtung 2 zum Portionieren von Kaffeebohnen K_{B1}; K_{B2} ist ein erster Kaffeebohnen-Zufuhrbehälter 21, welcher mit ersten Kaffeebohnen K_{B1} befüllbar ist, und ein zweiter Kaffeebohnen-Zufuhrbehälter 22, welcher mit zweiten Kaffeebohnen K_{B2} befüllbar ist, angeordnet. Durch Betätigung eines ersten Schiebers 23 am ersten Kaffeebohnen-Zufuhrbehälter 21 sind erste Kaffeebohnen K_{B1} der Einrichtung 2 zum Portionieren von Kaffeebohnen zuführbar (siehe auch Fig. 2a und 2b), während durch Betätigen eines zweiten Schiebers 24 am zweiten Kaffeebohnen-Zufuhrbehälter 22 zweite Kaffeebohnen K_{B2} der Einrichtung 2 zuführbar sind. Durch eine solche Ausgestaltung des erfindungsgemässen Kaffeevollautomaten 1 kann vorteilhaft erreicht werden, dass zwischen verschiedenen Kaffeebohnensorten, beispielsweise für einen Espresso oder einen Cafe Creme, gewählt werden kann und durch Betätigen beider Schieber 23; 24 eine Mischung nach eigenem Geschmack aus verschiedenen Kaffeebohnen erhalten werden kann.

Wie in Fig. 1 gezeigt, umfasst die Einrichtung 2 eine zu dem mindestens eine zu den Kaffeebohnen-Zufuhrbehältern 21; 22 hin angeordnete Portionierscheibe 25 und eine zwischen Portionierscheibe 25 und Mahleinrichtung 10 angeordnete Bodenscheibe 26. Die Portionierscheibe 25 umfasst zwei Kaffeeportionenbohrungen 28'; 28" zur Aufnahme von Kaffeebohnen K_{B1}; K_{B2} (siehe Fig. 2b) aus den Kaffeebohnen-Zufuhrbehältern 21; 22. Die Funktionalität der Einrichtung 2 zum Portionieren von Kaffeebohnen K_{B1}; K_{B2} ist in den Figuren 2a bis 2c noch weiter erläutert.

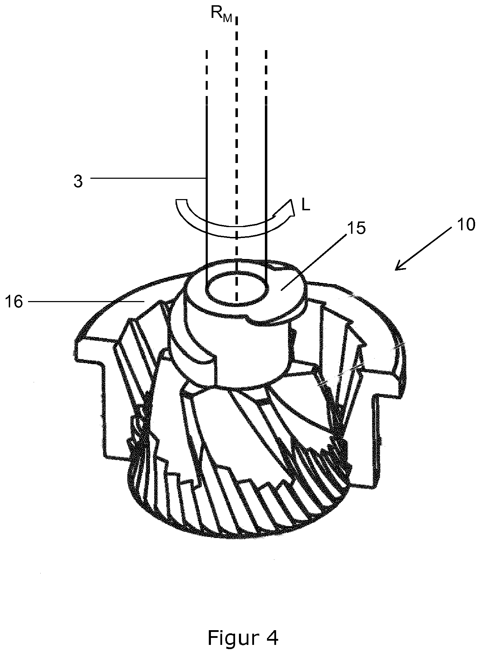

Im Weiteren umfasst gemäss Fig. 1 der Kaffeevollautomat eine Welle 3, welche mittelbar, d.h. mittels einer Kraftübertragungsverbindung, mit einem als Antrieb fungierenden Mahlwerksmotor 14 in Wirkverbindung steht und um eine Rotationsachse R_{P} drehbar gelagert ist. Die Welle 3 ist mit einem rotierbaren Mahlelement (siehe Fig. 4) eines Mahlwerks 11 der Mahleinrichtung 10 drehfest verbunden (siehe Fig. 4). Im Weiteren ist die Welle 3 drehfest mit der Portionierscheibe 25 derart verbunden, dass das rotierbare Mahlelement (siehe Fig. 4) der Mahleinrichtung 10 zum Vermahlen von Kaffeebohnen K_{B1}; K_{B2} und die Portionierscheibe 25 zum Betreiben der Einrichtung 2 mittels der Welle 3, beispielsweise in Drehrichtung L (oder die entgegengesetzte Richtung), gemeinsam antreibbar ist. Im Weiteren zeigt Fig. 1 einen beispielhaft mit dem Mahlwerksmotor 14 gekoppelten Sensor 19 zur Erfassung beispielsweise einer Anzahl Umdrehungen der Welle 3.

Gemäss Fig. 1 ist der mit der Welle 3 in mittelbarer Wirkverbindung stehende Mahlwerksmotor 14 relativ zur Mahleinrichtung 10 innerhalb des Kaffeevollautomaten 1 seitlich angeordnet, so dass eine idealerweise direkte Falllinie (F) zwischen Mahlwerk (11) und einer Brühkammer (32) des Kaffeevollautomaten (1) resultiert, wie dies aus der Schweizer Patentanmeldung Nr. 01757/14 bekannt ist. Eine derartige Ausgestaltung mit seitlich angeordnetem Mahlwerksmotor 14 kombiniert in einfacher Weise den Vorteil gemahlener Kaffeebohnen K_{G} ohne Zwischenlagerung und mögliches Verstopfen aufgrund liegengebliebener gemahlener Kaffeebohnen und damit vollständiger Zufuhr gemahlener Kaffeebohnen in die Brühkammer mit einer direkten Zufuhr einer jeweils gewählten Portion Kaffeebohnen aus der Einrichtung 2 zur Portionierung von Kaffeebohnen. Im Weiteren unterstützt diese seitliche Anordnung ebenfalls eine kompakte Bauweise. Insbesondere kann durch den Verzicht auf einen unterhalb der Mahleinrichtung 10 auf der der Einrichtung 2 abgewandten Seite angeordneten Mahlwerksmotor 14 zum Antreiben des Mahlwerks 11 die Bauhöhe h vorteilhaft reduziert werden. Eine Kraftübertragungsverbindung zwischen dem Mahlwerksmotor 14 und der Welle 3 wird idealerweise gemäss Fig. 1 durch einen Antriebsriemen 17, z.B. ein Zahn-, Flach- oder Keilriemen, sowie ein korrespondierendes Antriebsritzel 18 gebildet. Die Zuführung von Kaffeebohnen K_{B1}; K_{B2} zum Mahlwerk 11 erfolgt durch einen in Fig. 1 nicht gezeigten, in Form einer im Wesentlichen zentralen Öffnung ausgestalteten Zufuhrschacht im Getriebekopf 13. Der Antriebsriemen 17 wiederum wirkt über einen äusseren Zahnkranz 19 eines Getriebekopfs 13 auf die Welle 3 über eine drehfeste Verbindung, beispielsweise durch eine oder mehrere in Fig. 1 nicht gezeigte Verstrebungen im Zufuhrschacht des Getriebekopfs.

Fig. 1 zeigt im Weiteren eine Montageeinheit 5 zum Montieren der beiden Kaffeebohnen-Zufuhrbehälter 21; 22. Die Montageeinheit 5 kann beispielsweise einen in Fig. 1 nicht näher gezeigten Einrastmechanismus aufweisen, um die Kaffeebohnen-Zufuhrbehälter 21; 22 zu montieren. Zudem ist in Fig. 1 eine Gleitbuchse 6 zur Aufnahme der Welle 3 ersichtlich, welche mittig an der Montageeinheit 5 angebracht ist und in welcher die Welle 3 aufgenommen und rotierbar gelagert ist.

Zwischen der Einrichtung 2 zum Portionieren von Kaffeebohnen K_{B1}; K_{B2} und der Mahleinrichtung 10 ist eine trichterförmige Vorrichtung 30 angeordnet, um die portionierten Kaffeebohnen K_{B1}; K_{B2} verlustlos und zentriert über den Zufuhrschacht des Getriebekopfs 13 der Mahleinrichtung 10 zuzuführen. Im Weiteren kann - wie in Fig. 1 gezeigt - die trichterförmige Vorrichtung 30 optional einen dritten Schieber 29 auf der der Einrichtung 2 abgewandten Seite der trichterförmigen Vorrichtung 30 umfassen, mittels welchem portionierte Kaffeebohnen K_{B1}; K_{B2} aus der Einrichtung 2 vor einem Vermahlen in der Mahleinrichtung 10 aufgefangen werden können.

Der in Fig. 1 gezeigte Kaffeevollautomat 1 ist derart ausgestaltet, dass gemahlene Kaffeebohnen K_{G} direkt mittels der Schwerkraft in eine Brühkammer 32 einer Brüheinheit 31 des Kaffeevollautomaten 1 gelangen. Ein als geschlossenes Rohr ausgebildeter Schacht 33 ist zwischen der Mahleinrichtung 10 und der Brühkammer 32 angeordnet. Optional kann die Welle 3 sich unterhalb, d.h. auf der der Einrichtung 2 abgewandten Seite, des Mahlkegels 15 erstreckend ausgebildet sein (nicht gezeigt in Fig. 1) und an diesem sich unterhalb des Mahlkegels 15 sich erstreckenden Abschnitt eine Abstreifvorrichtung (nicht gezeigt in Fig. 1) angebracht sein. Insbesondere kann eine solche Abstreifvorrichtung durch einen Abstreifdraht, einen Federstahldraht oder eine Wischfeder gebildet sein und kann sich entlang des Mahlkegels bis an die Innenwand des Schachtes 33 erstrecken. Eine derartig angeordnete Abstreifvorrichtung verhindert vorteilhaft ein Absetzen von gemahlenen Kaffeebohnen auf dem Weg zwischen Mahleinrichtung 10 und Brüheinheit 31.

Von hier an und im Folgenden bezeichnen gleiche Referenzzeichen gleiche Komponenten in den Figuren.

Fig. 2a zeigt eine schematische Darstellung der Einrichtung 2 zum Portionieren von Kaffeebohnen K_{B1}; K_{B2} des erfindungsgemässen Kaffeevollautomaten 1 mit den Kaffeebohnen-Zufuhrbehälter 21; 22 mit geschlossenem Schieber 23. Durch ein Bewegen des ersten Schiebers 23 in Pfeilrichtung P lässt sich der Kaffeebohnen-Zufuhrbehälter 21 öffnen zur Befüllung der Kaffeeportionenbohrung 28' der Portionierscheibe 25, wie in Fig. 2b gezeigt ist.

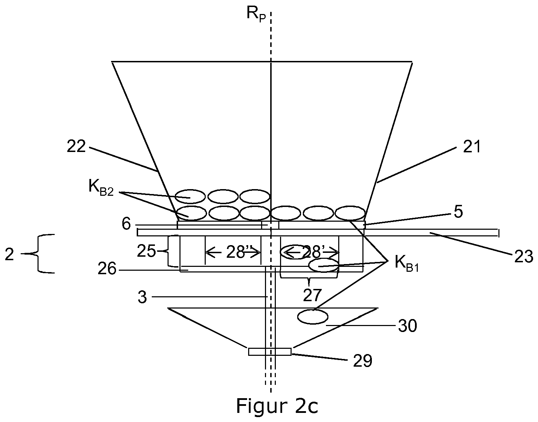

In Fig. 2b ist eine schematische Darstellung der Einrichtung 2 zum Portionieren von Kaffeebohnen des erfindungsgemässen Kaffeevollautomaten 1 mit geöffnetem, erstem Schieber 23 gezeigt. In der Kaffeeportionenbohrung 28' sind drei Kaffeebohnen K_{B1} aus dem Kaffeebohnen-Zufuhrbehälter 21 aufgenommen nach Hineinfallen aus dem Kaffeebohnen-Zufuhrbehälter 21. Die Portionierscheibe 25 ist drehfest mit der Welle 3 verbunden, wodurch sich durch Drehen der Welle beispielsweise in einer Drehrichtung L um die Rotationsachse R_{P} die Portionierscheibe 25 gleichsam relativ zur fest stehenden Bodenscheibe drehen lässt und dabei die Kaffeeportionenbohrung 28' der Portionierscheibe 25 über eine Ablassöffnung (siehe Fig. 2c) der Bodenscheibe 26 gelangen beziehungsweise in Deckung gebracht werden kann zur Entleerung der Kaffeeportionenbohrung 28' (siehe Fig. 2c) mit den drei Kaffeebohnen K_{B1}.

Fig. 2c zeigt eine schematische Darstellung der Einrichtung 2 zum Portionieren von Kaffeebohnen K_{B1}; K_{B2} des erfindungsgemässen Kaffeevollautomaten 1 bei Entleerung der Kaffeeportionenbohrung 28' der Portionierscheibe 25. Im in Fig. 2c gezeigten Entleerungszustand sind die Kaffeeportionenbohrung 28' der Portionierscheibe und die Ablassöffnung 27 der Bodenscheibe 26 miteinander in Deckung, so dass die drei portionierten Kaffeebohnen K_{B1} von der Einrichtung 2 über die trichterförmige Vorrichtung 30 in die in Fig. 1 gezeigte Mahleinrichtung gelangen können.

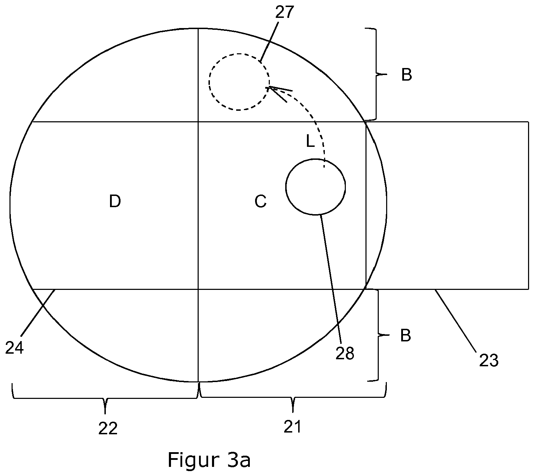

Fig. 3a zeigt eine schematische Obenansicht auf den erfindungsgemässen Kaffeevollautomaten 1 in einem Zustand der Befüllung der Kaffeeportionenbohrung 28 der Portionierscheibe 25. Der erfindungsgemässe Kaffeevollautomat 1 umfasst zwei halbkreisrunde Kaffeebohnen-Zufuhrbehälter 21; 22. Wie in Fig. 3a ersichtlich befindet sich die Ablassöffnung 27 in einem Bereich B ausserhalb des ersten Schiebers 23. Der erste Schieber 23 für einen Bereich C befindet sich in einem geöffneten Zustand und somit mit Kaffeebohnen aus dem Kaffeebohnen-Zufuhrbehälter 21 befüllbar, während der zweite Schieber 24 für einen Bereich D sich in einem geschlossenen Zustand befindet. Durch Rotieren der Portionierscheibe 25 in Drehrichtung L ist die Kaffeeportionenbohrung 28 in Richtung der in Fig. 3a gestrichelt angedeuteten Ablassöffnung 27 der Bodenscheibe (nicht ersichtlich in Fig. 3a) bewegbar. Der Einfachheit halber ist in Fig. 3a nur eine Kaffeeportionenbohrung 28 gezeigt, wobei die Portionierscheibe 25 vorteilhafterweise mehrere Kaffeeportionenbohrungen 28 vorzugsweise gleichmässig über den Umfang verteilt umfasst zur Beschleunigung des Portionierungsprozesses.

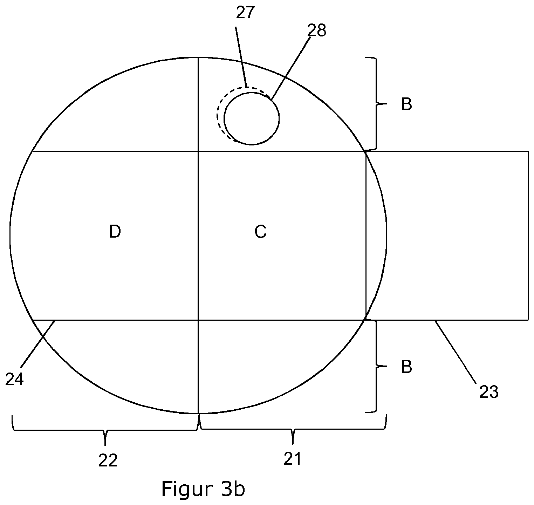

Fig. 3b zeigt eine schematische Obenansicht der Einrichtung zum Portionieren von Kaffeebohnen bei Entleerung der Kaffeeportionenbohrung 28 der Portionierscheibe 25. Im Bereich B sind die Kaffeebohnen-Zufuhrbehälter 21, 22 gegenüber der Portionierscheibe 25 abgeschlossen beziehungsweise es ist keine Passage für den Austritt von Kaffeebohnen aus dem mindestens einen Kaffeebohnen-Zufuhrbehälter vorhanden, weshalb im Bereich B ein unkontrolliertes Durchfallen von Kaffeebohnen K_{B1}; K_{B2} von den Kaffeebohnen-Zufuhrbehältern 21; 22 in die Mahleinrichtung verhindert wird, wenn -wie in Fig. 3b gezeigtdie Kaffeeportionenbohrung 28 und die Ablassöffnung 27 im Wesentlichen in Deckung sind zur Entleerung der Kaffeeportionenbohrung 28.

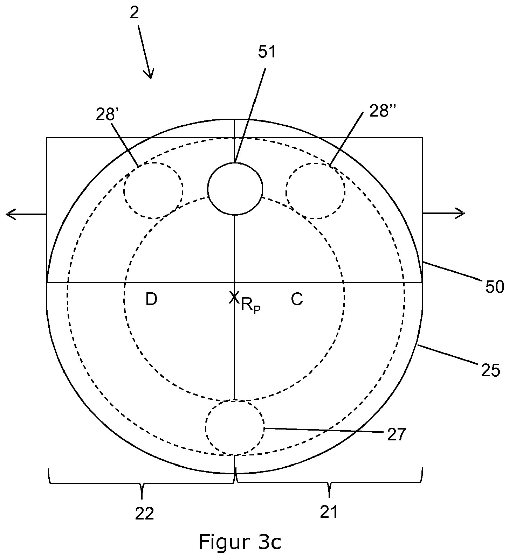

Fig. 3c zeigt eine schematische Obenansicht der Einrichtung 2 zum Portionieren von Kaffeebohnen des erfindungsgemässen Kaffeevollautomaten 1 mit einem einzigen Schieber 50 mit einem Loch 51 in einer Schliessstellung, wobei der Schieber 50 sich zumindest abschnittsweise in einen Bereich C unterhalb des Kaffeebohnen-Zufuhrbehälters 21 sowie in einen Bereich D unterhalb des Kaffeebohnen-Zufuhrbehälters 22 erstreckt und wobei der Schieber 50 ein Loch 51 umfasst.

Bei der in Fig. 3c gezeigten Ausführungsform ist die Portionierscheibe 25 feststehend. Gestrichelt sind zwei sich unterhalb des Schiebers 50 befindende Kaffeeportionenbohrungen 28'; 28" der Portionierscheibe 25 angedeutet.

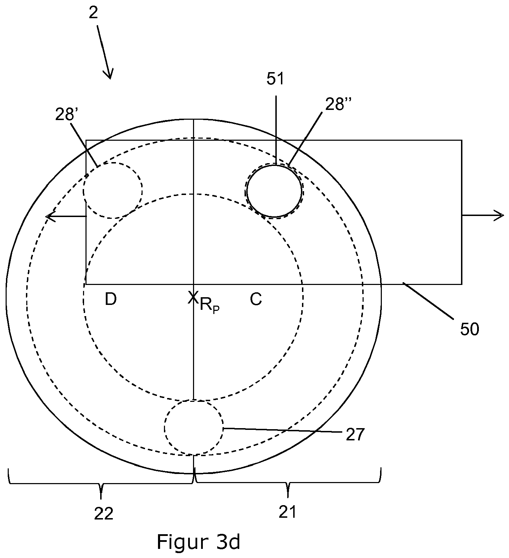

Das Loch 51 des in die Pfeilrichtungen bewegbaren Schiebers 50 ist in den Bereich C verschiebbar zur Aufnahme von Kaffeebohnen aus dem Kaffeebohnen-Zufuhrbehälter 22 in die Kaffeeportionenbohrung 28' (siehe Fig. 3d), beziehungsweise in den Bereich D verschiebbar zur Aufnahme von Kaffeebohnen aus dem Kaffeebohnen-Zufuhrbehälter 21 in die Kaffeeportionenbohrung 28". Durch Verschieben des Schiebers 50 bis zu einer bestimmten Auslenkung in den Bereich C ist das Loch 51 mit der Kaffeeportionenbohrung 28' oder 28" in Deckung bringbar und mit Kaffeebohnen aus dem Kaffeebohnen-Zufuhrbehälter 22 oder 21 befüllbar.

Im Weiteren zeigt Fig. 3c gestrichelt angedeutet eine Ablassöffnung 27 einer Bodenscheibe (nicht ersichtlich in Fig. 3c) unterhalb der Portionierscheibe 25. In dieser in Fig. 3c gezeigten Ausführungsform ist die Welle (nicht gezeigt in Fig. 3c) gleichsam mit der Bodenscheibe (nicht gezeigt in Fig. 3c) drehbar relativ zur feststehenden Portionierscheibe 25 ausgestaltet. In der in Fig. 3c gezeigten Schliessstellung ist das Loch 51 des Schiebers 50 mit keiner der Kaffeeportionenbohrungen 28"; 28' in Deckung, d.h. keine Kaffeebohnen können aus den Kaffeebohnen-Zufuhrbehältern 21; 22 in die Kaffeeportionenbohrungen 28"; 28'gelangen.

Fig. 3d zeigt eine schematische Obenansicht der Einrichtung 2 zum Portionieren von Kaffeebohnen des erfindungsgemässen Kaffeevollautomaten 1 mit dem mit dem Loch 51 versehenen Schieber 50 in einer Offenstellung, wobei das Loch 51 mit der Kaffeeportionenbohrung 28" in Deckung ist. Das Loch 51 des in die Pfeilrichtungen bewegbaren Schiebers 50 ist mit anderen Worten in den Bereich C bis zur Kaffeeportionenbohrung 28" verschoben zur Aufnahme von Kaffeebohnen aus dem Kaffeebohnen-Zufuhrbehälter 21 in die Kaffeeportionenbohrung 28". Wie in Fig. 3d ersichtlich, ist der Schieber 50 derart dimensioniert in jedem Verschiebungsbereich des Schiebers 50 die Kaffeeportionenbohrungen 28"; 28' unterhalb des Schiebers 50 und abgetrennt von den Kaffeebohnen-Zufuhrbehältern 21; 22 sind.

Eine Ablassöffnung 27 der Bodenscheibe (nicht ersichtlich in Fig. 3d) ist derart angeordnet (wie angedeutet anhand zweier, gestrichelter konzentrischer Kreise), dass die mindestens eine Ablassöffnung 27 mit den Kaffeeportionenbohrungen 28'; 28" durch Drehung der Bodenscheibe zumindest teilweise in Deckung bringbar ist zur Entleerung der Kaffeeportionenbohrungen 28'; 28".

Durch eine solche weitere Ausführungsform mit einem einzigen Schieber 50 mit einem Loch 51 wird vorteilhaft einer einfachen und schlanken Portioniereinrichtung 2 des erfindungsgemässen Kaffeevollautomaten 1 erzielt.

Im Weiteren zeigt Fig. 4 eine schematische Darstellung einer als Kegelmahlwerk ausgestalteten Mahleinrichtung 10 mit einer angeformten Welle 3 an einem inneren Mahlkegel 15 des erfindungsgemässen Kaffeevollautomaten 1. Der innere Mahlkegel 15 bildet ein während eines Mahlvorgangs rotierendes Mahlelement relativ zu einem an der Mahleinrichtung 10 fest stehenden Mahlring 16. Wie in Fig.4 ersichtlich bildet die Welle 3 die mittlere Drehachse beziehungsweise Rotationsachse des inneren Mahlkegels 15. Ein Rotieren der an den Mahlkegel 15 angeformten und fest verbundenen Welle 3 in eine Drehrichtung L um die Rotationsachse R_{M} bewirkt ein Rotieren des Mahlkegels 15. Die Rotationsachse R_{M} des inneren Mahlkegels entspricht im Wesentlichen der in Fig. 2a-c gezeigten Rotationsachse R_{P} der Portionierscheibe (nicht ersichtlich in Fig.4) beziehungsweise der Bodenscheibe (nicht ersichtlich in Fig. 4).

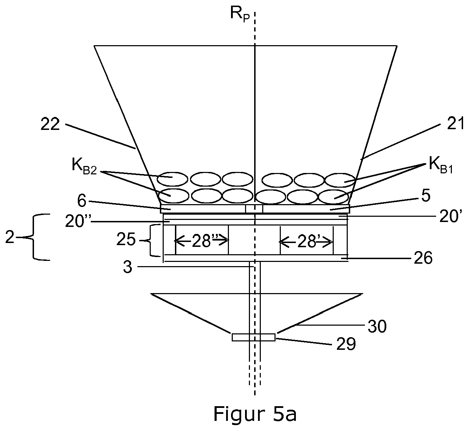

Fig. 5a zeigt eine schematische Darstellung einer zweiten Ausführungsform einer Einrichtung 2 zur Portionierung von Kaffeebohnen K_{B1}; K_{B2} des erfindungsgemässen Kaffeevollautomaten 1 mit einer ersten, den Kaffeebohnen-Zufuhrbehältern 21; 22 zugewandten Lochscheibe 20' und einer zweiten Lochscheibe 20" zwischen der ersten Lochscheibe 20' und der Portionierscheibe 25.

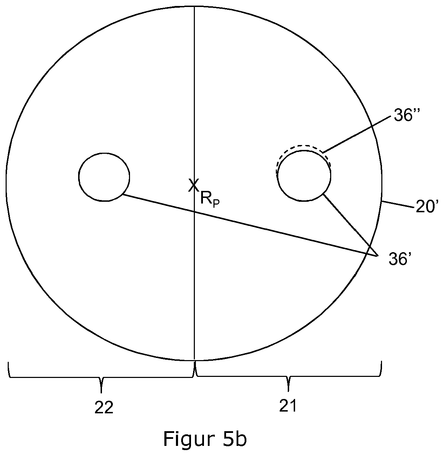

In Fig. 5b ist eine schematische Obenansicht der zweiten Ausführungsform des erfindungsgemässen Kaffeevollautomaten mit einer Lochscheibe 20' sowie einer unterhalb angeordneten zweiten Lochscheibe (siehe Fig. 5a). Wie in Fig. 5b gezeigt umfasst jeweils eine erste Lochscheibe 20' pro Kaffeebohnen-Zufuhrbehälter 21; 22 jeweils ein Loch 36', d.h. zwei Löcher 36' der Lochscheibe 20' beziehungsweise gestrichelt angedeutet die zweite Lochscheibe (siehe Fig. 5a) ein Loch 36". Die Löcher 36' beziehungsweise das Loch 36" sind derart auf den Lochscheiben 20' beziehungsweise 20" angeordnet, dass durch Drehen jeweils einer Lochscheibe 20' oder 20", beispielsweise mittels eines Schrittmotors, das Loch 36" jeweils einem der Löcher 36' in Deckung bringbar ist und dadurch jeweils einer der Kaffeebohnen-Zufuhrbehälter 21; 22 anwählbar ist, beispielsweise Kaffeebohnen-Zufuhrbehälter 21 gemäss Fig. 5b. Im Weiteren sind die Löcher 36' und 36" mit der mindestens einen Kaffeeportionenbohrung der Portionierscheibe (nicht ersichtlich in Fig. 5b) in Deckung bringbar zur Befüllung der mindestens einen Kaffeeportionenbohrung (nicht ersichtlich in Fig. 5b).

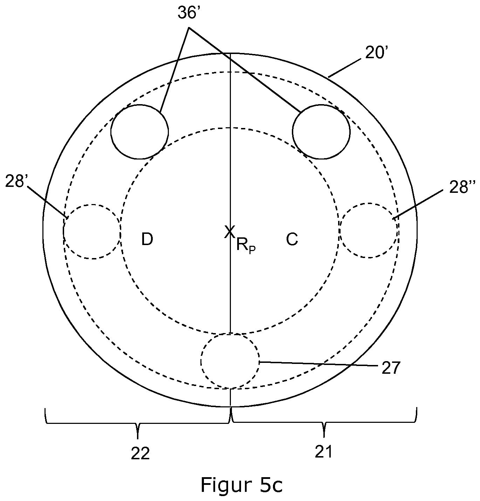

In Abgrenzung zu der in den Fig. 5a und 5b gezeigten, zweiten Ausführungsform (zwei Lochscheiben) zeigt Fig.5c eine schematische Obenansicht einer vorteilhaft konstruktiv vereinfachten, weiteren Ausführungsform der Einrichtung 2 zum Portionieren von Kaffeebohnen des erfindungsgemässen Kaffeevollautomaten 1 mit einer einzigen Lochscheibe 20' in einer Schliessstellung.

Bei dieser in Fig. 5c gezeigten, weiteren Ausführungsform ist die Portionierscheibe 25 feststehend. Gestrichelt sind zwei sich unterhalb der Lochscheibe 20' befindende Kaffeeportionenbohrungen 28'; 28" der Portionierscheibe 25 angedeutet. Beispielhaft umfasst die Lochscheibe 20' zwei derart angeordnete Löcher 36', so dass jeweils ein Loch 36' entweder nur mit der Kaffeeportionenbohrung 28' in Deckung (und damit in eine Offenstellung) bringbar ist zur Aufnahme von Kaffeebohnen aus dem Kaffeebohnen-Zufuhrbehälter 21 oder nur mit der Kaffeeportionenbohrung 28" in Deckung bringbar ist zur Aufnahme von Kaffeebohnen aus dem Kaffeebohnen-Zufuhrbehälter 22.

Grundsätzlich ist es gemäss einer alternativen Variante denkbar, dass die Lochscheibe 20' nur ein Loch aufweist, wobei jedoch die Variante mit der Lochscheibe 20' mit zwei Löchern 36' (gemäss Fig.5c) mit geringeren Wegen zu den jeweiligen Kaffeeportionenbohrungen 28'; 28" vorteilhafter ist.

Im Weiteren zeigt Fig. 5c gestrichelt angedeutet eine Ablassöffnung 27 einer Bodenscheibe (nicht ersichtlich in Fig. 5c) unterhalb der Portionierscheibe 25. In dieser in Fig. 5c gezeigten Ausführungsform ist die Welle (nicht gezeigt in Fig. 5c) gleichsam mit der Bodenscheibe (nicht gezeigt in Fig. 5c) drehbar relativ zur feststehenden Portionierscheibe 25 ausgestaltet.

Eine gestrichelt angedeutete Ablassöffnung 27 der Bodenscheibe (nicht ersichtlich in Fig. 5c) ist derart angeordnet (wie angedeutet anhand zweier, gestrichelter konzentrischer Kreise), dass die mindestens eine Ablassöffnung 27 mit den Kaffeeportionenbohrungen 28'; 28" zumindest teilweise in Deckung bringbar ist durch Drehung der Bodenscheibe zur Entleerung der Kaffeeportionenbohrungen 28'; 28".

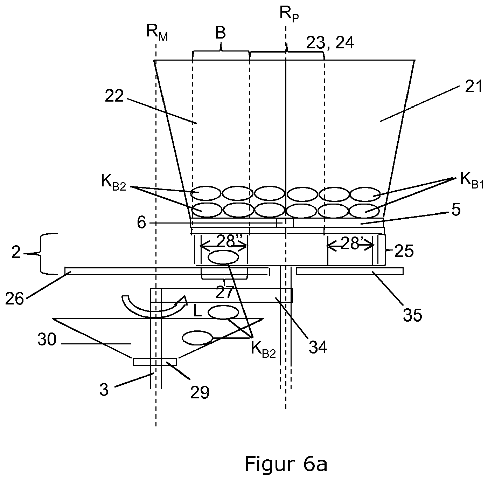

Fig. 6a zeigt schematische Darstellung einer dritten Ausführungsform des erfindungsgemässen Kaffeevollautomaten 1 mit einer Mahleinrichtung (nicht gezeigt in Fig. 6a) seitlich versetzt zu den Kaffeebohnen-Zufuhrbehältern 21; 22. Die Einrichtung 2 umfasst eine zu den Kaffeebohnen-Zufuhrbehältern 21; 22 hin angeordnete Portionierscheibe 25 und eine zwischen Portionierscheibe 25 und Mahleinrichtung 10 angeordnete, fest stehende Bodenscheibe 26. Die Welle 3, welche mit dem rotierbaren Mahlelement des Mahlwerks der Mahleinrichtung drehfest verbunden und um eine Rotationsachse R_{M} drehbar gelagert ist (nicht gezeigt in Fig. 6a), steht mittelbar mittels eines Keilriemens 34 mit der um die Rotationsachse R_{P} rotierbar gelagerten Portionierscheibe 25 in Wirkverbindung, wodurch mittels der Welle 3 das rotierbare Mahlelement der Mahleinrichtung (nicht gezeigt in Fig. 6a) und die rotierbar gelagerte Portionierscheibe 25 der Einrichtung 2 gemeinsam antreibbar sind. Wie in Fig. 6a gezeigt ist die Bodenscheibe 26 seitlich versetzt zur Portionierscheibe 25 angeordnet und eine Ablassöffnung 27 der Bodenscheibe 26 befindet sich in einem Bereich B ausserhalb des ersten bzw. zweiten Schiebers 23; 24. Fig. 6a zeigt den Kaffeevollautomaten 1 bei Entleerung der Kaffeeportionenbohrung 28" der Portionierscheibe 25, wobei die Kaffeeportionenbohrung 28" mit der Ablassöffnung 27 in Deckung ist und drei portionierte Kaffeebohnen K_{B2} über die trichterförmige Vorrichtung 30 in die Mahleinrichtung (nicht gezeigt in Fig. 6a) gelangen können. Eine zusätzliche Platte 35 oder dergleichen verhindert eine Entleerung der Portionierscheibe 25 ausserhalb des Bereichs der Bodenscheibe 26.

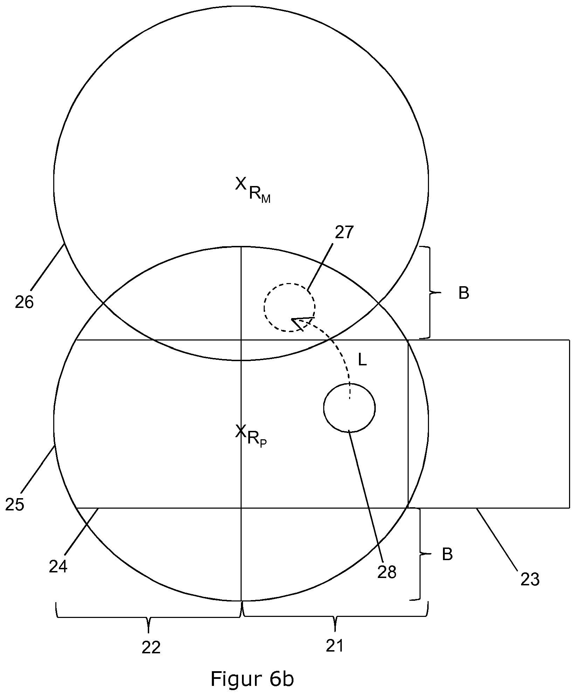

Fig. 6b zeigt eine schematische Obenansicht der dritten Ausführungsform des erfindungsgemässen Kaffeevollautomaten 1 mit versetzter Mahleinrichtung zu den Kaffeebohnen-Zufuhrbehältern 21; 22. Der Kaffeevollautomat befindet sich in einem Zustand der Befüllung der Kaffeeportionenbohrung 28 der Portionierscheibe 25 bei geöffnetem erstem Schieber 23. Wie in Fig. 6b gezeigt, ist die Bodenscheibe 26 seitlich versetzt zur Portionierscheibe 25 angeordnet. Wie in Fig. 6a gezeigt, kann mittels Drehen der Welle (nicht gezeigt in Fig. 6b) die Portionierscheibe 25 in eine Drehrichtung L um die Rotationsachse R_{P} gedreht werden und dadurch die Kaffeeportionenbohrung 28 mit der Ablassöffnung 27 in Deckung gebracht werden.

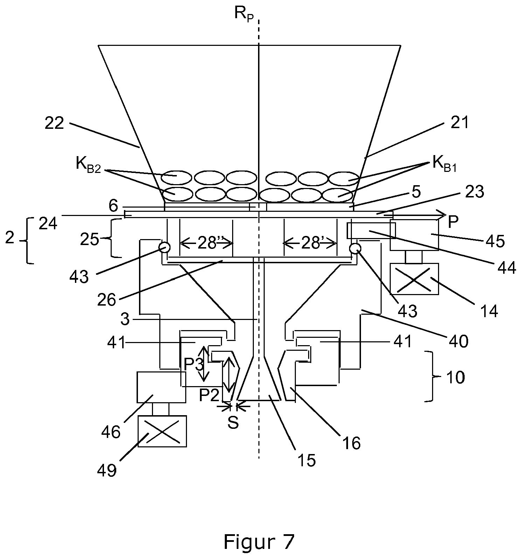

Fig. 7 zeigt schematische Darstellung einer vierten Ausführungsform des erfindungsgemässen Kaffeevollautomaten 1 mit einem Stützgehäuse 40, welches die Mahleinrichtung 10 und die Einrichtung 2 zum Portionieren von Kaffeebohnen aufnimmt und dadurch einer besonders kompakten und stabilen Bauweise entspricht. Das Stützgehäuse 40 ist mit geeigneten Mitteln im Kaffeevollautomaten fest in seiner Position fixiert angeordnet (nicht gezeigt in Fig. 7). Wie in Fig. 7 ersichtlich umfasst die Mahleinrichtung 10 den Mahlring 16 sowie einen an die Welle 3 angeformten, drehfest fixierten Mahlkegel 15. Mittels des Stützgehäuses 40 ist die Einrichtung 2 zur Portionierung von Kaffeebohnen mittels eines geeigneten Lagers, beispielsweise eines umlaufenden Rillenkugellagers 43, gelagert, wodurch im Bereich der Mahleinrichtung 10 auf eine zusätzliche Lagerung verzichtet und das Risiko eines möglichen Absetzens gemahlener Kaffeebohnen im Bereich der Mahleinrichtung 10 reduziert werden kann.
Wie im Weiteren in Fig. 7 ersichtlich ist das Stützgehäuse 40 in Richtung der Mahleinrichtung 10 sich konisch verjüngend ausgebildet, wodurch das Stützgehäuse 40 zwischen der Einrichtung 2 zum Portionieren und der Mahleinrichtung 10 abschnittsweise die Form eines Falltrichters ausbildet.

Wie in Fig. 7 zudem ersichtlich, geht das Stützgehäuse 40 unterhalb des Falltrichterabschnitts, d.h. zur Mahleinrichtung hin, in einen vertikalen Abschnitt über. Es ist zusätzlich optional denkbar, dass im Übergangsbereich zwischen dem Falltrichterbereich des Stützgehäuses 40 und dem vertikalen Abschnitt mindestens ein Lagersteg angeordnet ist, um möglicherweise mit der hängenden Lagerung auftretende, begünstigte Vibrationen ausgehend von der Mahleinrichtung 10 möglichst zu minimieren. Alternativ oder zusätzlich ist auch für die Welle 3 als weitere mögliche Einstellgrösse in Längsrichtung derart kurz auszugestalten, so dass Vibrationen ausgehend von der Mahleinrichtung 10 möglichst zu verhindern.

Gemäss dieser vierten Ausführungsform ist die Portionierscheibe 25 mit einer Aussenverzahnung versehen. Anhand des seitlich angeordneten Mahlwerksmotors 14 als Antrieb ist die Portionierscheibe 25 und über die drehfest fixierte Welle 3 der Mahlkegel 15 gemeinsam antreibbar, wobei wie in Fig. 7 ersichtlich der Mahlwerksmotor 14 über ein erstes Antriebsrad 45 und ein Antriebsritzel 44 der Mahlwerksmotor 14 mit der Portionierscheibe 25 in Wirkverbindung steht. Das Antriebsritzel 44 kann im Sinne der vorliegenden Erfindung als Übersetzung oder als reines Distanzmittel ohne ein Übersetzungsverhältnis ausgebildet sein.

Fig. 7 zeigt zudem mit dem Doppelpfeil P2 angedeutet einen höhenverstellbaren Mahlring 16, wodurch ein Spalt S zwischen Mahlring 16 und Mahlkegel 15 zur Erzielung einer bevorzugten Mahlfeinheit einstellbar ist beziehungsweise ein genügend grosser Spalt S erzeugbar ist, um Steinchen sowie allfällig vorhandenes ungemahlenes Mahlgut über den Spalt S und anschliessend über die Brüheinheit (nicht gezeigt in Fig. 7) in den Kaffeetrester (nicht gezeigt in Fig. 7) abzuführen. Ein Vorhandensein eines Steinchens im Mahlgut kann beispielsweise anhand einer Ampere-Überwachung des Mahlwerkmotors 14, welches das Überschreiten eines vordefinierten Widerstands im Mahlwerk registriert, feststellbar sein.

Wie im Weiteren in Fig. 7 ersichtlich wird die Höhenverstellbarkeit des Mahlrings 16 anhand eines Gewinderings 41 mit einem Aussengewinde erzielt, wobei das Aussengewinde des Gewinderings 41 in ein Innengewinde des Stützgehäuses 40 eingreift und dadurch die Mahleinrichtung 10 im Stützgehäuse 40 aufgenommen und höhenverstellbar ist. Gemäss Fig. 7 ist hierbei der Mahlring 16 im Gewindering 41 aufgenommen und dadurch der Gewindering 41 mit dem Mahlring 16 gleichsam höhenverstellbar wie angedeutet durch die Doppelpfeile P2 und P3, indem eine umlaufende Auswölbung des Mahlrings 16 in eine Nut des Gewinderings 41 eingreifen kann. Ein zusätzlicher Antrieb 49 steht gemäss Fig. 7 über ein zweites Antriebsrad 46 in Wirkverbindung mit dem Aussengewinde des Gewinderings 41, wodurch der Gewindering 41 rotierbar und gleichsam höhenverstellbar ist.

Oberhalb des Mahlkegels 15 kann beispielsweise an der Welle 3 eine Abstreifvorrichtung (nicht gezeigt in Fig. 7) angebracht sein, um ein Absetzen von Kaffeebohnen auf dem Weg bis zur Mahleinrichtung 10 zu verhindern. Alternativ oder zusätzlich kann in einem unterhalb des Mahlkegels 15 sich erstreckenden Abschnitt eine weitere Abstreifvorrichtung (nicht gezeigt in Fig. 7) angebracht sein, um ein Absetzen von gemahlenen Kaffeebohnen auf dem Weg zwischen Mahleinrichtung 10 und Brüheinheit 31 zu verhindern. Insbesondere kann eine solche Abstreifvorrichtung durch eine Wischfeder, Abstreifdraht oder Federstahldraht ausgebildet sein.

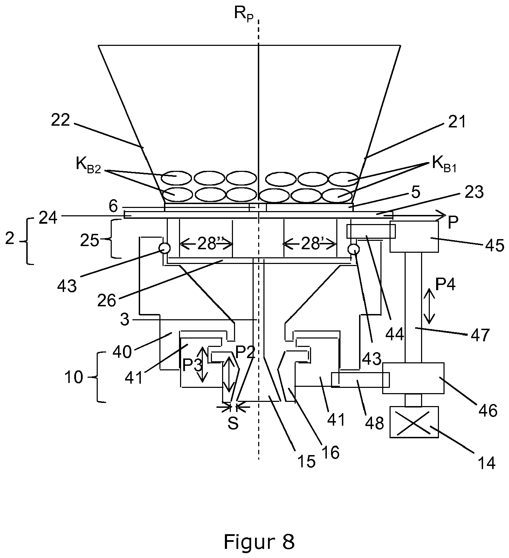

Fig. 8 zeigt eine schematische Darstellung einer fünften Ausführungsform des erfindungsgemässen Kaffeevollautomaten 1 mit einem Stützgehäuse 40 mit einer gegenüber der vierten Ausführungsform alternativ ausgestalteten Antriebsvariante. Wie in Fig. 8 ersichtlich ist gemäss dieser fünften Ausführungsform das erste Antriebsrad 45 und das zweite Antriebsrad 46 mittels einer Welle 47 drehfest miteinander verbunden. Wie mittels eines Doppelpfeils P4 ersichtlich ist die mit den Antriebsrädern 45; 46 verbundene Welle 47 translatorisch verschiebbar im erfindungsgemässen Kaffeevollautomaten angeordnet, so dass entweder nur das erste Antriebsrad 45 oder nur das zweite Antriebsrad 46 antreibbar sind. Die translatorische Verschiebung kann beispielsweise durch einen geeigneten Schiebemechanismus, Elektromagnet oder dergleichen erzielbar sein. Zwischen dem zweiten Antriebsrad 46 und dem Gewindering 41 kann - wie in Fig.8 gezeigt - ein Antriebsritzel 48 angeordnet sein. Anhand einer geeigneten Ausgestaltung dieser Antriebsvariante der fünften Ausführungsform ist gewährleistet, dass in jeglicher translatorische Position der Welle 47 der Antrieb 14 mit mindestens einem der Antriebsräder 45 oder 46 in Wirkverbindung stehen kann. Im Weiteren ist vorzugsweise die Antriebsvariante der fünften Ausführungsform über einen geeigneten Mechanismus derart ausgestaltet, dass situativ je nach Betriebszustand entweder das Antriebsrad 45 vom Antriebsritzel 44 oder das Antriebsrad 46 vom Antriebsritzel 48 entkoppelbar ist. Diese Antriebsvariante der fünften Ausführungsform ermöglicht dabei vorteilhaft, dass situativ je nach Betriebszustand sowohl zur Einstellung des Spalts S zwischen Mahlring 16 und Mahlkegel 15 wie auch zum Antreiben der Portionierscheibe 25 beziehungsweise des Mahlkegels 15 nur ein Antrieb 14 notwendig ist.

Optional kann vorteilhaft der erfindungsgemässe Kaffeevollautomat anhand einer geeigneten Elektronik derart ausgestaltet sein, dass anhand des Antriebs 14 je nach Betriebszustand die Portionierscheibe 25 der Einrichtung 2 zum Portionieren, der Mahlkegel 15 oder die Einstellung des Spalts S die jeweils bevorzugte Drehgeschwindigkeit einstellbar ist. Das Antriebsritzel 48 kann im Sinne der vorliegenden Erfindung als Übersetzung oder als reines Distanzmittel ohne ein Übersetzungsverhältnis ausgebildet sein.

### Bezugszeichenliste

1 Kaffeevollautomat
2 Einrichtung zum Portionieren von Kaffeebohnen
3 Welle
5 Montageeinheit
6 Gleitbuchse
10 Mahleinrichtung
11 Mahlwerk
13 Getriebekopf
14 Mahlwerksmotor (Antrieb)
15 Mahlkegel
16 Mahlring
17 Antriebsriemen
18 Antriebsritzel
19 Sensor
20', 20" Lochscheibe
21 erster Kaffeebohnen-Zufuhrbehälter
22 zweiter Kaffeebohnen-Zufuhrbehälter
23 erster Schieber
24 zweiter Schieber
25 Portionierscheibe
26 Bodenscheibe
27 Ablassöffnung (Bodenscheibe)
28', 28" Kaffeeportionenbohrung (Portionierscheibe)
29 dritter Schieber
30 trichterförmige Vorrichtung
31 Brüheinheit
32 Brühkammer
33 Schacht
34 Keilriemen
35 Platte
36' Loch (erste Lochscheibe)
36" Loch (zweite Lochscheibe)
40 Stützgehäuse
41 Gewindering
43 Rillenkugellager
44 Antriebsritzel
45 erstes Antriebsrad (Portionierscheibe)
46 zweites Antriebsrad (Gewindering)
47 Welle
48 Antriebsritzel
49 Antrieb
50 Schieber
51 Loch (Schieber 50)
B Bereich (Ablassöffnung)
C Bereich (erster Schieber)
D Bereich (zweiter Schieber)
K_{B1} erste Kaffeebohnen
K_{B2} zweite Kaffeebohnen
K_{G} gemahlene Kaffeebohnen
L Drehrichtung
P Pfeilrichtung
R_{M} Rotationsachse (Mahlkegel)
R_{P} Rotationsachse (Portionierscheibe)
S Spalt

## Patentansprüche

1. Kaffeevollautomat (1) mit einer Mahleinrichtung (10) zum Mahlen von Kaffeebohnen (K_{B1}; K_{B2}),
umfassend
eine Einrichtung (2) zum Portionieren von Kaffeebohnen (K_{B1}; K_{B2}), wobei die Kaffeebohnen (K_{B1}; K_{B2}) der Einrichtung (2) aus mindestens einem Kaffeebohnen-Zufuhrbehälter (21; 22) zuführbar sind, wobei der Kaffeevollautomat (1) eine drehbar gelagerte Welle (3) umfasst, welche mittelbar oder unmittelbar mit einem Antrieb in einer Wirkverbindung steht,
wobei die Welle (3) drehfest mit einem rotierbaren Mahlelement der Mahleinrichtung (10) verbunden ist und mittelbar oder unmittelbar mit der Einrichtung (2) in Wirkverbindung steht, so dass das rotierbare Mahlelement der Mahleinrichtung (10) zum Vermahlen von Kaffeebohnen (K_{B1}; K_{B2}) und die Einrichtung (2) mittels der Welle (3) gemeinsam antreibbar sind,
**dadurch gekennzeichnet, dass**
die Einrichtung (2) eine zu dem mindestens einen Kaffeebohnen-Zufuhrbehälter (21; 22) hin angeordnete Portionierscheibe (25) und mindestens eine zwischen Portionierscheibe (25) und Mahleinrichtung (10) angeordnete Bodenscheibe (26) umfasst, wobei die Portionierscheibe (25) mindestens eine Kaffeeportionenbohrung (28) umfasst zur Aufnahme mindestens einer Kaffeebohne (K_{B1}; K_{B2}) aus dem mindestens einen Kaffeebohnen-Zufuhrbehälter (21; 22), und
wobei die Bodenscheibe (26) mindestens eine Ablassöffnung (27) umfasst zur Entleerung der Kaffeeportionenbohrung (28), und wobei die Welle (3) drehfest mit der Portionierscheibe (25) oder der Bodenscheibe (26) der Einrichtung (2) verbunden ist.

2. Kaffeevollautomat (1) nach Patentanspruch 1,
**dadurch gekennzeichnet, dass**
der Kaffeevollautomat (1) mindestens einen Schieber (23; 24) umfasst, wobei der mindestens eine Schieber (23; 24) zwischen dem mindestens einen Kaffeebohnen-Zufuhrbehälter (21; 22) und der Einrichtung (2) angeordnet ist.

3. Kaffeevollautomat (1) nach Patentanspruch 2,
**dadurch gekennzeichnet, dass**
die mindestens eine Ablassöffnung (27) der Bodenscheibe (26) in einem Bereich (B) ausserhalb des mindestens einen Schiebers (23; 24) angeordnet ist.

4. Kaffeevollautomat (1) nach einem der Patentansprüche 1 bis 3, **dadurch gekennzeichnet, dass**
der Antrieb durch einen Mahlwerksmotor (14) ausgebildet ist, wobei der Mahlwerksmotor (14) relativ zu einem Mahlwerk (11) der Mahleinrichtung (10) innerhalb des Kaffeevollautomaten (1) derart seitlich versetzt angeordnet ist, so dass eine Falllinie (F) zwischen Mahlwerk (11) und einer Brühkammer (32) des Kaffeevollautomaten (1) resultiert.

5. Kaffeevollautomat (1) nach einem der Patentansprüche 1 bis 4, **dadurch gekennzeichnet, dass**
der Kaffeevollautomat (1) eine Montageeinheit (5) zum Montieren des mindestens einen Kaffeebohnen-Zufuhrbehälters (21; 22) umfasst.

6. Kaffeevollautomat (1) nach Patentanspruch 5
**dadurch gekennzeichnet, dass**
der Kaffeevollautomat (1) eine Gleitbuchse (6) zur Aufnahme der Welle (3) umfasst,
wobei die Gleitbuchse (6) an der Montageeinheit (5) angeordnet ist, und wobei die Welle (3) in der Gleitbuchse (6) geführt und rotierbar gelagert ist.

7. Kaffeevollautomat (1) nach einem der vorherigen Patentansprüche, **dadurch gekennzeichnet, dass**
der Kaffeevollautomat (1) eine trichterförmige Vorrichtung (30) umfasst zur Aufnahme von portionierten Kaffeebohnen (K_{B1}; K_{B2}), wobei die trichterförmige Vorrichtung (30) zwischen der Einrichtung (2) zum Portionieren von Kaffeebohnen (K_{B1}; K_{B2}) und der Mahleinrichtung (10) angeordnet ist.

8. Kaffeevollautomat (1) nach Patentanspruch 7
**dadurch gekennzeichnet, dass**
die trichterförmige Vorrichtung (30) einen dritten Schieber (29) umfasst, wobei der dritte Schieber (29) auf der der Einrichtung (2) abgewandten Seite der trichterförmigen Vorrichtung (30) angeordnet ist.

9. Verfahren zum Betreiben eines Kaffeevollautomaten nach einem der vorherigen Patentansprüche, umfassend die Verfahrensschritte:
a) Öffnen des ersten und/oder zweiten Schiebers zur Befüllung der mindestens einen Kaffeeportionenbohrung der Portionierscheibe;
b) Drehen der Kaffeeportionenbohrung der Portionierscheibe über die Ablassöffnungen der Bodenscheibe zur Entleerung der Kaffeeportionenbohrung der Portionierscheibe, so dass die Kaffeebohnen mittelbar oder unmittelbar der Mahleinrichtung zugeführt werden;
c) Schliessen des ersten und/oder zweiten Schiebers zur Beendigung des Portionierungsvorgangs (und Weitervermahlung der Kaffeebohnen) nach Erreichen einer vorbestimmten Anzahl Befüllungen gemäss Schritt a) und Entleerungen gemäss Schritt b) der Kaffeeportionenbohrungen.

## Claims

1. Fully automatic coffee machine (1) with a grinding device (10) for grinding coffee beans (K_{B1}; K_{B2}), comprising
a device (2) for portioning coffee beans (K_{B1}; K_{B2}), wherein the coffee beans (K_{B1}; K_{B2}) can be supplied to the device (2) from at least one coffee bean supply container (21; 22), wherein
the fully automatic coffee machine (1) comprises a rotatably borne shaft (3) which is in direct or indirect effective connection with an actuator,
wherein the shaft (3) is connected in a rotationally fixed manner to a rotating grinding element of the grinding device (10) and is in direct or indirect effective connection with the device (2) so that the rotatable grinding element of the grinding device (10) for grinding the coffee beans (K_{B1}; K_{B2}) and the device (2) can be jointly actuated by the shaft (3) **characterised in that**
the device (2) comprises at least one portioning disc (25) arranged facing a coffee bean supply container (21; 22) and at least one base disc (26) arranged between the portioning disc (25) and the grinding device (10), wherein the portioning disc (25) has at least one coffee portioning bore (28) for receiving at least one coffee bean (K_{B1}; K_{B2}) from the at least one coffee bean supply container (21; 22) and
wherein the base disc (26) has at least one outlet opening (27) for emptying the coffee portioning bore (28) and wherein the shaft (3) is connected in a rotationally fixed manner to the portioning disc (25) or the base disc (26) of the device (2).

2. Fully automatic coffee machine (1) according to claim 1
**characterised in that**
the fully automatic coffee machine (1) comprises at least one pusher (23; 24), wherein the at least one pusher (23; 24) is arranged between the at least one coffee bean supply container (21; 22) and the device (2) .

3. Fully automatic coffee machine (1) according to claim 2
**characterised in that**
the at least one outlet opening (27) of the base disc (26) is arranged in an area (B) outside the at least one pusher (23; 24).

4. Fully automatic coffee machine (1) according to any one of claims 1 to 3
**characterised in that**
the actuator is formed by a grinder motor (14) wherein the grinder motor (14) is arranged laterally offset relative to a grinder (11) of the grinding device (10) within the fully automatic coffee machine (1), so that a fall line (F) results between the grinder (11) and a brewing chamber (32) of the fully automatic coffee machine (1).

5. Fully automatic coffee machine (1) according to any one of claims 1 to 4
**characterised in that**
the fully automatic coffee machine (1) comprises a mounting unit (5) for mounting the at least one coffee bean supply container (21; 22).

6. Fully automatic coffee machine (1) according to claim 5
**characterised in that**
the fully automatic coffee machine (1) comprises a slide bushing (6) for receiving the shaft (3),
wherein the slide bushing (6) is arranged on the mounting unit (5) and wherein the shaft (3) is guided and rotatably borne in the slide bushing (6).

7. Fully automatic coffee machine (1) according to any one of the preceding claims
**characterised in that**
the fully automatic coffee machine (1) comprises a funnel-shaped device (30) for receiving portioned coffee beans (K_{B1}; K_{B2}), wherein the funnel-shaped device (30) is arranged between the device (2) for portioning coffee beans (K_{B1}; K_{B2}) and the grinding device (10) .

8. Fully automatic coffee machine (1) according to claim 7
**characterised in that**
the funnel-shaped device (30) comprises a third pusher (29), wherein the third pusher (29) is arranged on the side of the funnel-shaped device (30) facing away from the device (2).

9. Method of operating a fully automatic coffee machine according to any one of the previous claims comprising the processing steps:
a) opening the first and/or second pusher for filling the at least one coffee portioning bore of the portioning disc;
b) turning the coffee portioning bore of the portioning disc over the outlet openings of the base disc to empty the coffee portioning bore of the portioning disc so that the coffee beans are directly or indirectly supplied to the grinding device;
c) closing of the first and/or second pusher to end the portioning process (and further grinding of the coffee beans) after reaching a predetermined number of fillings in accordance with step a) and emptyings in accordance with b) of the coffee portioning bores.

## Revendications

1. Machine à café entièrement automatique (1) avec un dispositif de mouture (10) pour moudre du café en grains (K_{B1},K_{B2}),
comprenant
un dispositif (2) pour la mise en portions de café en grains (K_{B1},K_{B2}), le café en grains (K_{B1},K_{B2}) pouvant être acheminé au dispositif (2) depuis au moins un réservoir d'alimentation de café en grains (21,22),
la machine à café entièrement automatique (1) comprenant un arbre logé pouvant tourner (3), lequel étant mis en liaison fonctionnelle indirectement ou directement avec un système d'entraînement,
l'arbre (3) étant relié solidaire en rotation avec un élément de broyage rotatif du dispositif de mouture (10) et étant indirectement ou directement en liaison fonctionnelle avec le dispositif (2) de telle sorte que l'élément de broyage rotatif du dispositif de mouture (10) destiné à moudre le café en grains (K_{B1},K_{B2}) et le dispositif (2) peuvent être entraînés ensemble au moyen de l'arbre (3),
**caractérisé en ce que**
le dispositif (2) comprend un disque de mise en portions (25) disposé au moins en direction d'un réservoir d'alimentation de café en grains (21,22) et au moins un disque de fond (26) disposé entre le disque de mise en portion (25) et le dispositif de mouture (10),
le disque de mise en portions (25) comprenant au moins une alvéole de portions de café (28) pour recevoir au moins un grain de café (K_{B1},K_{B2}), depuis au moins un réservoir d'alimentation de café en grains (21,22), et le disque de fond (26) comprenant au moins une ouverture d'écoulement (27) pour vider l'alvéole de portion de café (28), et
l'arbre (3) étant relié solidaire en rotation au disque de mise en portions (25) ou au disque de fond (26) du dispositif (2) .

2. Machine à café entièrement automatique (1) selon la revendication 1, **caractérisée en ce que** la machine à café entièrement automatique (1) comprend au moins un poussoir (23,24), au moins un poussoir (23,24) étant disposé entre au moins un réservoir d'alimentation de café en grains (21,22) et le dispositif (2).

3. Machine à café entièrement automatique (1) selon la revendication 2, **caractérisée en ce qu'**au moins une ouverture d'écoulement (27) du disque de fond (26) est disposée dans une zone (B) en dehors d'au moins un poussoir (23,24).

4. Machine à café entièrement automatique (1) selon l'une quelconque des revendications 1 à 3, **caractérisée en ce que** le système d'entraînement est constitué par un moteur de broyeur (14), le moteur de broyeur (14) étant disposé décalé latéralement par rapport à un broyeur (11) du dispositif de mouture (10) à l'intérieur de la machine à café entièrement automatique (1) de telle sorte qu'il résulte une ligne de chute (F) entre le broyeur (11) et une chambre de percolation (32) de la machine à café entièrement automatique (1).

5. Machine à café entièrement automatique (1) selon l'une quelconque des revendications 1 à 4, **caractérisée en ce que** la machine à café entièrement automatique (1) comprend une unité de montage (5) pour monter au moins un réservoir d'alimentation de café en grains (21,22).

6. Machine à café entièrement automatique (1) selon la revendication 5, **caractérisée en ce que** la machine à café entièrement automatique (1) comprend une douille de guidage (6) pour loger l'arbre (3), la douille de guidage (6) étant disposée sur l'unité de montage (5) et l'arbre (3) étant passé et logé pouvant tourner dans la douille de guidage (6).

7. Machine à café entièrement automatique (1) selon l'une quelconque des revendications précédentes, **caractérisée en ce que** la machine à café entièrement automatique (1) comprend un dispositif en forme de trémie (30) pour recevoir du café en grains en portions (K_{B1}, K_{B2}), le dispositif en forme de trémie (30) étant disposé entre le dispositif (2) pour mettre en portions le café en grains (K_{B1},K_{B2}), et le dispositif de mouture (10).

8. Machine à café entièrement automatique (1) selon la revendication 7, **caractérisée en ce que** le dispositif en forme de trémie (30) comprend un troisième poussoir (29), le troisième poussoir (29) étant disposé sur le côté opposé au dispositif (2) du dispositif en forme de trémie (30).

9. Méthode pour faire fonctionner une machine à café entièrement automatique selon l'une quelconque des revendications comprenant les étapes de la méthode suivantes :
a) ouverture du premier et/ou du deuxième poussoir pour remplir au moins une alvéole de portion de café du disque de portionnement,
b) rotation de l'alvéole de portion de café du disque de portionnement sur les ouvertures d'écoulement du disque de fond pour vider l'alvéole de portion de café du disque de portionnement de telle sorte que le café en grains est indirectement ou directement acheminé au dispositif de mouture,
c) fermeture du premier et/ou du deuxième poussoir pour terminer l'opération de mise en portions (et poursuivre la mouture du café en grains) une fois atteint un nombre prédéfini de remplissages selon l'étape a) et de vidages selon l'étape b) des alvéoles de portion de café.
